(19) Europäisches Patentamt
European Patent Office
Office européen des brevets

(11) **EP 1 382 479 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(51) Int Cl.:
***B60W 10/02*** *(2006.01)*

(21) Anmeldenummer: **03013712.9**

(22) Anmeldetag: **17.06.2003**

(54) **Verfahren zur Durchführung eines Anfahrvorgangs bei einem eine Doppel- oder Mehrfach-Kupplungseinrichtung aufweisenden Kraftfahrzeug-Antriebssystem**

Method for driving off for a vehicle drive system containing a double clutch

Méthode de démarrage d'un système de transmission de véhicule avec une boîte de vitesse à double embrayage

(84) Benannte Vertragsstaaten:
**AT BE BG CH CY CZ DE DK EE ES FI FR GB GR HU IE IT LI LU MC NL PT RO SE SI SK TR**

(30) Priorität: **17.07.2002 DE 10232229**

(43) Veröffentlichungstag der Anmeldung:
**21.01.2004 Patentblatt 2004/04**

(73) Patentinhaber: **ZF Friedrichshafen AG**
**80846 Friedrichshafen (DE)**

(72) Erfinder: **John, Thomas, Dipl.-Ing.**
**97529 Alitzheim (DE)**

(56) Entgegenhaltungen:
**DE-A1- 4 204 401       DE-A1- 19 931 160**
**DE-C1- 19 937 716**

## Beschreibung

Die Erfindung bezieht sich allgemein auf ein Kraftfahrzeug, umfassend einen Antriebsstrang bzw. ein Antriebssystem mit einem Antriebsmotor, einer Getriebeanordnung, die eine erste Getriebeeingangswelle und eine zweite Getriebeeingangswelle aufweist, und einer Kupplungseinrichtung, die einer der ersten Getriebeeingangswelle zugeordnete erste Kupplungsanordnung und eine der zweiten Getriebeeingangswelle zugeordnete zweite Kupplungsanordnung aufweist, zur Momentenübertragung zwischen der Antriebseinheit und der Getriebeanordnung, wobei der Getriebeanordnung und der Kupplungseinrichtung jeweils eine Aktuator-Anordnung und eine die Aktuator-Anordnungen ansteuernde Steuereinrichtung zugeordnet ist, unter deren Vermittlung der ersten und der zweiten Getriebeeingangswelle zugeordnete Getriebegänge ein- und auslegbar sind und die Kupplungsanordnungen im Einrück- und im Ausrücksinn betätigbar sind. Die Erfindung bezieht sich ferner auf ein Verfahren zur Durchführung eines Anfahrvorgangs bei einem Kraftfahrzeug-Antriebssystem (insbesondere eines Kraftfahrzeugs wie vorangehend angesprochen), welches einen Antriebsmotor, eine automatisierte Kupplungseinrichtung und eine vermittels der Kupplungseinrichtung mit dem Antriebsmotor in Drehmomentübertragungsverbindung bringbare Getriebeanordnung umfasst, wobei die Kupplungseinrichtung als Doppel- oder Mehrfach-Kupplungseinrichtung ausgeführt ist und eine einer ersten Getriebeeingangswelle zugeordnete erste Kupplungsanordnung und eine einer zweiten Getriebeeingangswelle zugeordnete zweite Kupplungsanordnung aufweist.

In Kraftfahrzeugen mit eine automatisierte Kupplungseinrichtung aufweisenden Antriebssystemen ist es allgemein das Ziel, dafür zu sorgen, dass die Ansteuerung der verschiedenen Systembereiche derart erfolgt, dass die durchgeführten Anfahrvorgänge einen möglichstharmonischen Bewegungsablauf des Fahrzeugs erzeugen, bei welchem Stöße und in Zwischenphasen auftretende ungewünschte Beschleunigungen vermieden werden können. Hierzu ist beispielsweise aus der DE 199 58 076 A1 eine Vorgehensweise bekannt, bei der in Zuordnung zu einer Fahreranforderung, beispielsweise erzeugt durch Niederdrücken eines Gaspedals, eine sogenannte Einbremsdrehzahl bestimmt wird. Einer jeden Einbremsdrehzahl ist ein vorbestimmter Motordrehzahlverlauf zugeordnet, und durch Erzwingen einer Motordrehzahländerung durch entsprechende Ansteuerung der Kupplung zum Einrücken derselben wird eine möglichst sanfte Heranführung der Motordrehzahl an die sich erhöhende Getriebeeingangsdrehzahl erzeugt.

Aus der EP 0 911 206 A2 ist es bekannt, dass beim Niederdrücken eines Fahrpedals des Fahrzeugs das dem Ausmaß des Niederdrückens entsprechende vom Fahrer angeforderte Motormoment erst mit einer vorgegebenen zeitlichen Verzögerung oder mit geringerer Änderungsrate angefahren wird.

Aus der DE 100 30 837 A1 ist eine spezielle Ansteuerung einer Reibungskupplung bekannt, um beim Anfahren einen tangentialen Angleich zwischen der Motordrehzahl und der Getriebedrehzahl zu erreichen.

Aus der WO 00/14439 ist ein Verfahren zur Ermittlung einer Anfahr-Gangstufe für ein Fahrzeug mit einem Stufenwechselgetriebe mit mehreren Gangstufen bekannt. Es wird in Abhängigkeit von verschiedenen Parametern mit einem möglichst hohen Anfahrgang von zur Verfügung stehenden Anfahrgängen angefahren.

Die DE 196 19 717 A1 schlägt eine Anfahrsteuervorrichtung für ein Kraftfahrzeug-Automatikgetriebe vor, die in Abhängigkeit von der Änderungsrate einer Drosselklappenöffnung ein Anfahren mit dem ersten oder dem zweiten Gang vorsieht.

Aus der DE 43 13 167 C2 ist es an sich bekannt, im Zusammenhang mit einem Lastschaltgetriebe unter Vermittlung von zwei parallel betriebenen Reibungskupplungen anzufahren.

Die DE 100 15 296 A1 schlägt auf Grundlage eines Doppelkupplungsgetriebes vor, mittels zweier zugeordneter Kupplungen und zwei den Kupplungen zugeordneten, gleichzeitig eingelegten Getriebegängen anzufahren. Entsprechende bzw. ähnliche Vorschläge macht auch die DE 38 12 327 A1.

Aus der DE 199 34 997 A1 ist ein Verfahren zur Steuerung eines Schaltvorganges eines automatisierten Doppelkupplungsgetriebes, insbesondere eines Kraftfahrzeugs, bekannt, bei dem von einem wirksamen Lastgang in einen Zielgang gewechselt wird. Es wird hierbei eine Übergangsdrehzahl eingestellt und nachfolgend der Zielgang geschaltet, bevor unter Konstanthaltung der Übergangsdrehzahl ein überschnittenes Schließen der dem Zielgang zugeordneten Kupplung und ein Öffnen der dem Lastgang zugeordneten Kupplung erfolgt. Hierdurch sollen Schwankungen der Motordrehzahl infolge der Überschneidungsschaltung vermieden werden.

Weiterhin ist aus der DE 19937716C1 ein Verfahren zur Steuerung eines Doppelkupplungsgetriebes bekannt. Bei dem Verfahren ist eine Steuereinrichtung als Gangprognostizier- und Gangvorwahleinrichtung ausgebildet, durch welche auf Grund von Betriebsdaten ein Gangwechsel prognostizierbar ist. In Abhängigkeit der Wahrscheinlichkeit eines zukünftigen Gangwechsels kann ein Gang auf einem lastfreien Teilgetriebe bereits vorgewählt werden.

Der nächstliegende bekanntgewordene Stand der Technik ist der Dokument DE19937716 zu entnehmen.

Bei herkömmlichen Antriebssystemen, die eine Einfach-Kupplungseinrichtung mit genau einer Kupplungsanordnung und ein Stufenautomatgetriebe mit genau einer Getriebeeingangswelle aufweisen, ist es bekannt, ein Anfahren im zweiten Getriebegang vorzusehen. Im Falle einer Lasterhöhung während des Anfahrvorganges wird gemäß einer bekannten Ausgestaltung automatisch in den ersten Gang zurückgeschaltet. Durch den Schaltvorgang zwischen dem zweiten und dem ersten Gang tritt eine für den Fahrer bzw. die Fahrzeuginsassen spürbare und möglicherweise als störend empfundene Änderung der Beschleunigung des Kraftfahrzeugs auf.

In jüngerer Zeit haben Antriebssysteme mit so genannten Doppelkupplungen und so genannten Lastschalt- bzw. Doppelkupplungsgetrieben eine größere Beachtung gefunden, da derartige Systeme einen Fahrkomfort ähnlich wie herkömmliche Automatgetriebe mit Drehmomentwandler versprechen, ohne dass die Verluste eines Drehmomentwandlers auftreten. Derartige Systeme ermöglichen ein Schalten ohne Zugkraftunterbrechung bzw. ohne Motorbremskraftunterbrechung, indem eine so genannte Überschneidungsschaltung durchgeführt wird, bei der in Zuordnung zu beiden Getriebeeingangswellen jeweils ein Getriebegang eingelegt wird und die der einen Getriebeeingangswelle zugeordnete Kupplungsanordnung, die bisher eingerückt ist, ausgerückt und die der anderen Getriebeeingangswelle zugeordnete Kupplungsanordnung, die bisher ausgerückt ist, synchron zum Ausrücken der erstgenannten Kupplungsanordnung eingerückt wird. Soweit ersichtlich, hat man bisher betreffend das Anfahren eines entsprechenden Kraftfahrzeugs bisher nur in Erwägung gezogen, im ersten Getriebegang anzufahren und dann im Wege der angesprochenen Überschneidungsschaltung sequenziell zu höheren Gängen hochzuschalten.

Eine Aufgabe der vorliegenden Erfindung ist, ein Verfahren zur Durchführung eines Anfahrvorgangs bei einem Kraftfahrzeug-Antriebssystem wie angesprochen vorzusehen, mit welchem in komfortabler Art und Weise ein Fahrzeug bei einem Anfahrvorgang beschleunigt werden kann.

Gemäß der vorliegenden Erfindung wird diese Aufgabe gelöst durch ein Verfahren zur Durchführung eines ggf. einen Kriechvorgang umfassenden Anfahrvorgangs bei einem Kraftfahrzeug-Antriebssystem, welches einen Antriebsmotor, eine automatisierte Kupplungseinrichtung und eine vermittels der Kupplungseinrichtung mit dem Antriebsmotor in Drehmomentübertragungsverbindung bringbare Getriebeanordnung umfasst, wobei die Kupplungseinrichtung als Doppel- oder Mehrfach-Kupplungseinrichtung ausgeführt ist und eine einer ersten Getriebeeingangswelle zugeordnete erste Kupplungsanordnung und eine einer zweiten Getriebeeingangswelle zugeordnete zweite Kupplungsanordnung aufweist. Das erfindungsgemäße Verfahren zeichnet sich dadurch aus, dass in Vorbereitung des Anfahrvorgangs in Zuordnung zur ersten Getriebeeingangswelle ein erster Vorwärts-Anfahrgang der Getriebeanordnung und in Zuordnung zur zweiten Getriebeeingangswelle ein zweiter Vorwärts-Anfahrgang der Getriebeanordnung mit einer gegenüber dem ersten Vorwärts-Anfahrgang geringeren Übersetzung beide eingelegt oder - wenn zutreffend - in einem eingelegten Zustand gehalten werden, dass ein vorgegebener oder ein beruhend zumindest auf einer Fahreranforderung ausgewählter der beiden Vorwärts-Anfahrgänge für den Beginn des eigentlichen Anfahrvorgangs oder eines vorausgehenden Kriechvorgangs dadurch aktiviert wird, dass die der betreffenden Getriebeeingangswelle zugeordnete Kupplungsanordnung in Einrückrichtung betätigt wird, und dass der jeweils andere der beiden Vorwärts-Anfahrgänge deaktiviert bleibt oder dadurch deaktiviert wird, dass die der betreffenden Getriebeeingangswelle zugeordnete Kupplungsanordnung in Ausrückrichtung betätigt wird, dass im Zuge des Anfahrvorgangs wenigstens einmal, vorzugsweise wiederholt oder ständig, in Abhängigkeit zumindest von der momentanen Fahreranforderung eine Revision der momentanen Aktivierungs-/Deaktivierungszustände der beiden Vorwärts-Anfahrgänge derart erfolgt, dass in Abhängigkeit zumindest von der momentanen Fahreranforderung entweder i) die momentanen Aktivierungs-/Deaktivierungszustände ungeändert bleiben, oder ii) die momentanen Aktivierungs-/Deaktivierungszustände im Sinne einer Deaktivierung des momentan aktivierten Vorwärts-Anfahrgangs und einer Aktivierung des momentan nicht aktivierten Vorwärts-Anfahrgangs geändert werden, wobei der momentan aktivierte Vorwärts-Anfahrgang dadurch deaktiviert wird, dass die der betreffenden Getriebeeingangswelle zugeordnete Kupplungsanordnung in Ausrückrichtung betätigt wird, und wobei der momentan nicht aktivierte Vorwärts-Anfahrgang dadurch aktiviert wird, dass die der betreffenden Getriebeeingangswelle zugeordnete Kupplungsanordnung in Einrückrichtung betätigt wird.

Dem Erfindungsvorschlag liegt die Erkenntnis zugrunde, dass das gleichzeitige Einlegen von zwei Gängen, in diesem Zusammenhang des ersten und des zweiten Vorwärts-Anfahrganges, neben der reinen Durchführung der Überschneidungsschaltung beim sequenziellen Hoch- bzw. Herunterschalten zusätzliche Möglichkeiten speziell auch betreffend das Anfahren des Kraftfahrzeugs eröffnet. So kann in Abhängigkeit von einer Fahreranforderung (etwa Betätigung des Fahr- bzw. Gaspedals) sowie ggf. in diesem Zusammenhang relevanter externer oder/und interner Parameter zum Anfahren entweder der erste oder der zweite Vorwärts-Anfahrgang aktiviert bzw. zwischen dem ersten und dem zweiten Vorwärts-Anfahrgang gewechselt werden, ohne dass tatsächlich das Getriebe geschaltet werden muss und - bei Durchführung einer Überschneidungsschaltung zum Gangwechsel - ohne dass es zu einer Zugkraftunterbrechung oder einer merklichen Beschleunigungsänderung durch den Schaltungsvorgang bzw. den Vorgang der Umlagerung des Antriebsmoments von der einen zur anderen Getriebeeingangswelle infolge der gegenläufigen Betätigung der Kupplungsanordnungen kommt bzw. kommen muss.

Die Entscheidung, welcher Gang primär bzw. im Einzelfall zum Anfahren genutzt wird, kann von entsprechenden Vorgaben, vom aktuellen Fahrerwunschmoment bzw. dessen Änderung, von der Steigung (Steigungswiderstand bzw. Hangabtriebskraft), vom Fahrbahnreibwert (Radschlupf), vom Beladungszustand des Kraftfahrzeugs, von Kupplungsbelastungszuständen usw. abhängen. Der vom Fahrer initiierte Anfahrvorgang kann von unterschiedlichen Ausgangszuständen ausgehen, etwa vom Zustand, dass das Fahrzeug stillsteht, vom Zustand, dass das Fahrzeug rollt, vom Zustand, dass eine Kriechfunktion aktiv ist, oder vom Zustand, dass an einer Steigung eine Fahrzeughaltefunktion aktiv ist.

Geht man von einem "normalen" Fahrzustand in der Ebene aus, erfolgt bevorzugt bei einer gewünschten Vorwärtsfahrt das Kriechen im zweiten Vorwärts-Anfahrgang (wenn eine Kriechfunktion überhaupt vorgesehen ist). Der Fahrer kann etwa durch Betätigung des Fahr- oder Gaspedals einen Anfahrwunsch äußern, und der Fahrzustand wechselt dann vom Kriechen zum Anfahren. Es kann vorgesehen sein, dass der Beginn des Anfahrvorgangs auf Grundlage des (insoweit vorgegebenen) zweiten Vorwärts-Anfahrgangs erfolgt. Eine andere Möglichkeit ist, dass in Abhängigkeit von der Fahreranforderung und ggf. weiterer Parameter einer der beiden Vorwärts-Anfahrgänge für die Einleitung des Anfahrvorgangs ausgewählt und aktiviert wird.

Während des Anfahrvorgangs erfolgt wenigstens einmal, vorzugsweise wiederholt oder ständig, die Revision der momentanen Aktivierungs-/Deaktivierungszustände der beiden Vorwärts-Anfahrgänge. Wurde beispielsweise das Anfahren auf Grundlage des zweiten Vorwärts-Anfahrgangs eingeleitet, so erfolgt beispielsweise dann eine Momentenübergabe von der Getriebeeingangswelle des zweiten Vorwärts-Antriebsgangs auf die Getriebeeingangswelle des ersten Vorwärts-Anfahrgangs, wenn die Fahreranforderung (Fahrerwunsch) über einen Vergleichswert (Schwellenwert) ansteigt. Der Vergleichswert kann ein parametrierbarer, steigungs-, belastungs-, beladungs- bzw. schlupfabhängiger Vergleichswert sein. Zur Momentenübergabe wird die dem zweiten Vorwärts-Anfahrgang zugeordnete Kupplungsanordnung geöffnet und die dem ersten Vorwärts-Anfahrgang zugeordnete Kupplungsanordnung eingerückt, und zwar vorzugsweise in Abhängigkeit von der Fahreranforderung bzw. eines hieraus abgeleiteten Fahrerwunschmoments. Bevorzugt wird die Revision, d. h. Überprüfung und ggf. Änderung, der momentanen Aktivierungs-/Deaktivierungszustände während des gesamten Anfahrvorgangs wiederholt oder ständig durchgeführt. Gemäß der hier verwendeten Nomenklatur ist der eigentliche Anfahrvorgang dann beendet, wenn die Drehzahldifferenz bzw. der Schlupf zwischen der Getriebeeingangswelle des aktivierten bzw. zuletzt aktivierten Vorwärts-Anfahrgangs und der Motordrehzahl abgebaut ist. Es ist aber nicht ausgeschlossen, auch noch Abläufe nach dem Abbau dieser Drehzahldifferenz dem "Anfahrvorgang", auf den sich die Erfindung bezieht, zuzurechnen, insbesondere dann, wenn sich an den eigentlichen Anfahrvorgang eine etwa durch Änderung der Fahreranforderung ausgelöste Überschneidungsschaltung zwischen den beiden Vorwärts-Anfahrgängen oder zu einem nächsthöheren Vorwärtsgang anschließt.

Der Erfindungsvorschlag eröffnet viele vorteilhafte Möglichkeiten. Erfolgt beispielsweise während eines dem Anfahrvorgang ggf. zuzurechnenden Kriechvorgangs ein Übergang aus der Ebene in eine Steigung, so resultiert steigungsabhängig eine Hangabtriebskraft, die durch das Motormoment kompensiert bzw. bei einem Kriechwunsch zumindest kurzzeitig überkompensiert werden muss. Gangübersetzungsabhängig ergeben sich unterschiedliche Motormomentenanforderungen, die im Leerlaufdrehzahlbereich nicht zur Verfügung stehen. Erfolgt das Kriechen unter Normalbedingungen im zweiten Vorwärts-Anfahrgang, wie oben schon angesprochen, so kann nach der Erfindung beispielsweise dann auf den ersten Vorwärts-Anfahrgang umgekuppelt werden, wenn die momentane Motormomentenanforderung einen Vergleichswert oder Schwellenwert überschreitet. Sollte das vom Motor im Leerlaufdrehzahlbereich zur Verfügung stellbare Moment weiterhin nicht ausreichen, so kann zweckmäßig eine Anhebung der Motordrehzahl erfolgen.

Es soll noch angemerkt werden, dass es durchaus im Rahmen der Erfindung liegt, dass in gewissen Situationen von den angesprochenen Verfahrensschritten bzw. Verfahrensvorschriften abgewichen wird. So kann beispielsweise im Falle von nasslaufenden Kupplungsanordnungen vorgesehen sein, dass etwa in einem Tieftemperaturbereich infolge erhöhter Schleppmomente andere Kombinationen gleichzeitig eingelegter Gänge realisiert werden, beispielsweise dass ein Vorwärts-Anfahrgang in Zuordnung zu der einen Getriebeeingangswelle und ein Rückwärtsgang in Zuordnung zu der anderen Getriebeeingangswelle gleichzeitig eingelegt sind, so dass bei einer erforderlichen Fahrtrichtungsumkehr etwa im Rangierbetrieb keine Schaltung des Getriebes durchgeführt werden muss, sondern die Fahrtrichtungsumkehr im Wege eines Umkuppelns zwischen den beiden eingelegten Gängen erreicht werden kann. Stellt sich dann im Betrieb ein Normalbetriebstemperaturbereich betreffend die Kupplungseinrichtung bzw. das für den Nasslaufbetrieb verwendete Öl ein, in dem Schleppmomente auf ein Niveau reduziert sind, dass Schaltvorgänge problemlos ablaufen können, werden dann nach der Erfindung bei stillstehendem Kraftfahrzeug bzw. bei sich mit einer Geschwindigkeit unterhalb einer Geschwindigkeitsschwelle bewegendem Kraftfahrzeug der erste und der zweite Vorwärts-Anfahrgang parallel eingelegt.

Für das erfindungsgemäße Verfahren wird weiterbildend allgemein vorgeschlagen, dass die Revision der momentanen Aktivierungs-/Deaktivierungszustände der beiden Vorwärts-Anfahrgänge derart erfolgt, dass die Fahreranforderung oder eine damit im Zusammenhang stehende Größe, insbesondere eine ein momentanes oder künftiges Anforderungsmoment angebende oder damit im Zusammenhang stehende Größe, die zumindest von der momentanen Fahreranforderung abhängt, mit wenigstens einer vorgegebenen oder in Abhängigkeit von internen oder/und externen Parametern bestimmten Vergleichsgröße verglichen wird und in Abhängigkeit hiervon entweder i) die momentanen Aktivierungs-/Deaktivierungszustände ungeändert bleiben, oder ii) die momentanen Aktivierungs-/Deaktivierungszustände im Sinne der Deaktivierung des momentan aktivierten Vorwärts-Anfahrgangs und der Aktivierung des momentan nicht aktivierten Vorwärts-Anfahrgangs geändert werden. Insbesondere wird daran gedacht, dass ein Vergleich mit genau einer Vergleichsgröße erfolgt, und dass dann, wenn die Fahreranforderung oder damit im Zusammenhang stehende Größe kleiner als die Vergleichsgröße ist, die momentanen Aktivierungs-/Deaktivierungszustände ungeändert bleiben, und dass dann, wenn die Fahreranforderung oder damit im Zusammenhang stehende Größe größer als die Vergleichsgrößeist, die momentanen Aktivierungs-/Deaktivierungszustände im Sinne der Deaktivierung des momentan aktivierten Vorwärts-Anfahrgangs und der Aktivierung des momentan nicht aktivierten Vorwärts-Anfahrgangs geändert werden.

Je nach Zweckmäßigkeit kann die Revision der momentanen Aktivierungs-/Deaktivierungszustände der beiden Vorwärts-Anfahrgänge weiterhin in Abhängigkeit von wenigstens einer weiteren im Zusammenhang mit einer Momentenanforderung bzw. Momentenabgabe relevanten Größe erfolgen. Es wird beispielsweise daran gedacht, dass die Revision der momentanen Aktivierungs-/Deaktivierungszustände der beiden Vorwärts-Anfahrgänge in Abhängigkeit von wenigstens einer Größe bzw. einem Parameter bzw. einem Zustand aus der Gruppe Fahrzeugbelastung, Ladezustand des Fahrzeugs, Steigung des Fahrzeug-Untergrunds, Schlupf/Traktion an den angetriebenen Rädern, sonstige den Betriebs- oder Fahrzustand des Fahrzeugs bzw. des Motors charakterisierende Größen und Parameter erfolgt. Es kann dabei die Vergleichsgröße in Abhängigkeit von der relevanten Größe oder/und von der Größe bzw. dem Parameter bzw. dem Zustand aus der Gruppe bestimmt werden.

Eine besonders bevorzugte Ausgestaltung zeichnet sich dadurch aus, dass die Revision der momentanen Aktivierungs-/Deaktivierungszustände der beiden Vorwärts-Anfahrgänge in Abhängigkeit von wenigstens einer vorgegebenen Bedingung erfolgt, und dass dann, wenn diese Bedingung zutrifft, zwingend eine Änderung der momentanen Aktivierungs-/Deaktivierungszustände im Sinne der Deaktivierung des momentan aktivierten Vorwärts-Anfahrgangs und der Aktivierung des momentan nicht aktivierten Vorwärts-Anfahrgangs unterbunden wird oder zwingend die momentanen Aktivierungs-/Deaktivierungszustände im Sinne der Deaktivierung des momentan aktivierten Vorwärts-Anfahrgangs und der Aktivierung des momentan nicht aktivierten Vorwärts-Anfahrgangs geändert werden. In diesem Zusammenhang wird insbesondere daran gedacht, dass im Falle eines einen Schwellenwert übersteigenden Schlupfes an wenigstens einem der angetriebenen Fahrzeugräder die bestehende Aktivierung des zweiten Anfahr-Vorwärtsgang zwingend beibehalten wird oder/ dass im Falle eines einen Schwellenwert übersteigenden Schlupfes an wenigstens einem der angetriebenen Fahrzeugräder und einer momentanen Aktivierung des ersten Vorwärts-Anfahrgangs zwingend der erste Vorwärts-Anfahrgang deaktiviert und der zweite Vorwärts-Anfahrgang aktiviert wird.

Bewegt sich beispielsweise das Fahrzeug auf einem Fahrbahnbelag mit geringem Reibwert, und es stellt sich bei der Anfahrt etwa im zweiten Vorwärts-Anfahrgang Schlupf an den angetriebenen Rädern ein bzw. es werden schlupfreduzierende Maßnahmen durch entsprechende Systeme aktiviert, so kann nach dem Weiterbildungsvorschlag ein Umkuppeln auf den ersten Vorwärts-Anfahrgang unterbunden werden. Tritt der Schlupf bei aktiviertem ersten Vorwärts-Anfahrgang ein, so kann nach dem Weiterbildungsvorschlag zur Vermeidung bzw. Reduzierung des Schlupfes in den zweiten Vorwärts-Anfahrgang umgekuppelt werden.

Es wurde schon erwähnt, dass dem eigentlichen Anfahrvorgang ein Kriechvorgang vorausgehen kann, der in der Regel besonders zweckmäßig auf Grundlage des aktivierten zweiten Vorwärts-Anfahrgang durchgeführt werden kann oder sollte. Als vorgegebener Vorwärts-Anfahrgang kann zweckmäßig der zweite Vorwärts-Anfahrgang vorgesehen sein. Möchte man auf die Vorgabe eines Vorwärts-Anfahrgangs verzichten, so ist es in der Regel zweckmäßig, dass in dem Fall, dass bezogen auf vorgegebene Kriterien Normalbedingungen herrschen, für den Beginn des Anfahrvorgangs der zweite Vorwärts-Anfahrgang aktiviert wird.

Eine besonders bevorzugte Ausgestaltung des Anfahrverfahrens zeichnet sich dadurch aus, dass im Rahmen des Verfahrens die folgenden Verfahrensschritte jeweils wenigstens einmal durchgeführt werden:

a) beruhend auf der Fahreranforderung, Ermitteln eines Fahreranforderungsmotormomentes oder einer damit in Zusammenhang stehenden Größe,
b) Verringern des im Schritt a) ermittelten Fahreranforderungsmotormomentes bzw. der damit in Zusammenhang stehenden Größe um einen Differenzbetrag zum Erhalt eines Vorgabemotormomentes oder einer damit in Zusammenhang stehenden Größe,
c) Setzen des Vorgabemotormomentes bzw. der damit in Zusammenhang stehenden Größe als Sollgröße und Ansteuern des Antriebsmotors derart, dass dieser ein im Bereich des Vorgabemotormomentes liegendes Motormoment abgibt,
d) Verstellen der betreffenden Kupplungsanordnung in Richtung Einkuppeln,
e) Setzen des Fahreranforderungsmotormomentes bzw. der damit in Zusammenhang stehenden Größe als Sollgröße und Ansteuern des Antriebsmotors derart, dass dieser ein im Bereich des Fahreranforderungsmotormomentes liegendes Motormoment abgibt.

Bei der hier vorgeschlagenen Vorgehensweise wird also das durch entsprechende Anforderung vom Fahrer eigentlich geforderte Motordrehmoment zunächst nicht angefahren. Es wird lediglich ein verringertes Drehmoment angefahren und durch damit auch einhergehendes Einrücken der Kupplung die Drehzahl an der Getriebeeingangsseite erhöht. In einer zweiten Stufe wird dann für das vom Motor abzugebende Drehmoment das tatsächlich vom Fahrer angeforderte Drehmoment vorgegeben und durch entsprechende Ansteuerung der Motor in einen Zustand gebracht, in welchem er dieses Motormoment abgibt. Dabei dient im Wesentlichen die erste Phase, also die Phase, in der der Motor auf ein hinsichtlich des vom Fahrer geforderten Drehmomentes reduziertes Drehmoment eingestellt wird, zur Beschleunigung der Getriebeeingangsseite. Diese wird dabei in einen Zustand gebracht, in welcher die Drehzahl der Getriebeeingangsseite näherungsweise konstant ansteigt. In der zweiten Phase wird dann durch weiteres Erhöhen des Motormoments dafür gesorgt, dass auch auf der Antriebsseite, also im Bereich des Motors, ein entsprechender Anstieg der Drehzahl erreicht wird, so dass im Idealfall die Motordrehzahl und die Getriebeeingangsdrehzahl sich im gleichen Ausmaß erhöhen bzw. auch den gleichen Wert aufweisen.

Weiterbildend wird vorgeschlagen, dass im Falle einer Änderung des Fahrerwunschmoments oder/und im Zusammenhang mit einer Revision der momentanen Aktivierungs-/Deaktivierungszustände der beiden Vorwärts-Anfahrgänge oder/und in Folge einer Änderung wenigstens eines internen oder externen Parameters wenigstens einer der Schritte a) bis e) wiederholt wird. Dabei kann vorgesehen sein, dass im Zusammenhang mit einer Revision der momentanen Aktivierungs-/Deaktivierungszustände der beiden Vorwärts-Anfahrgänge oder/und im Falle einer Änderung des Fahrerwunschmoments oder/und einer Änderung wenigstens eines internen oder externen Parameters wenigstens einer der Schritte a) bis e) abgebrochen wird und dass dann dieser Schritt oder/und wenigstens ein zugeordneter Modifikationsschritt sofort oder verzögert, ggf. nach Durchführung wenigstens eines anderen der Schritte a) bis e), wiederholt wird, wenn zutreffend unter Berücksichtigung des geänderten Fahrerwunschmoments bzw. geänderten Parameters. Dem Schritt d) kann beispielsweise als Modifikationsschritt ein Schritt zugeordnet sein, der eine Verstellung der Kupplungsanordnung in Richtung Auskuppeln beinhaltet (Schritt $d_{mod}$). Auf diese Weise kann beispielsweise ein Umkuppeln zwischen den beiden Vorwärts-Anfahrgängen oder auch nur eine Anpassung der dem momentan aktivierten Vorwärts-Anfahrgang zugeordneten, zuvor erfindungsgemäß in Richtung Einkuppeln betätigten Kupplungsanordnung an geänderte Umstände in das erfindungsgemäße Verfahren gemäß den hier angesprochenen Weiterbildungsvorschlägen einbezogen werden.

In der Regel wird es zweckmäßig sein, wenn der Differenzbetrag und damit das Vorgabemotormoment bzw. die damit im Zusammenhang stehende Größe in Abhängigkeit vom aktivierten bzw. zu aktivierenden Vorwärts-Anfahrgang ermittelt werden.

Bevorzugt ist vorgesehen, dass der Differenzbetrag und damit das Vorgabemotormoment bzw. die damit in Zusammenhang stehende Größe beruhend auf einer Motor-Trägheitsmomentengröße und einer mit einer dem aktivierten bzw. zu aktivierenden Vorwärts-Anfahrgang zugeordneten Getriebeeingangsdrehzahländerung in Zusammenhang stehenden Größe ermittelt wird. Wie bereits angesprochen, ist es ein Ziel der verschiedenen Schritte der bevorzugten Ausgestaltung des erfindungsgemäßen Verfahrens, die Motordrehzahl möglichst sanft an die Drehzahl der Getriebeeingangswelle heranzuführen. Wird dabei in der ersten Phase das vom Motor abgegebene Drehmoment um einen Wert verringert, der mit der Drehzahländerung an der Getriebeeingangsseite zusammenhängt und der überdies das im Motor vorhandene Trägheitsmoment berücksichtigt, so kann das in der zweiten Stufe hinzuzufügende Motordrehmoment sehr genau derart abgestimmt werden, dass auf der Motorseite die gleiche Drehzahländerungsrate erreicht wird, wie auf der Getriebeeingangsseite.

Um zu spontane Drehzahländerungen im Bereich des Antriebsmotors zu vermeiden, wird vorgeschlagen, dass im Schritt c) der Antriebsmotor derart angesteuert wird, dass die zeitliche Änderung des Motormomentes eine vorbestimmte Änderungsrate nicht übersteigt.

Weiter kann bei der vorliegenden Efindung vorgesehen sein, dass während des Schritts c) im Schritt d) die Kupplungsanordnung derart in Richtung Einkuppeln verstellt wird, dass ein über die Kupplungsanordnung übertragenes Kupplungsmoment dem Vorgabemotormoment angenähert wird. Hier kann beispielsweise auch derart vorgegangen werden, dass während des Schritts c) im Schritt d) die Kupplunganordnung derart angesteuert wird, dass die Motordrehzahl sich einer beruhend auf der Fahreranforderung bestimmten Fahreranforderungsmotordrehzahl annähert. Durch Abstimmung der Einrückbewegung der Kupplung auf das Vorgabemotormoment kann letztendlich erreicht werden, dass über die Kupplung genau dieses Motordrehmoment übertragen wird. Die Folge davon ist, dass der Antriebsmotor in einen Zustand im Wesentlichen konstanter Drehzahl gebracht wird, was dann der Fall ist, wenn das vom Motor abgegebene Drehmoment mit dem über die Kupplung übertragenen Drehmoment übereinstimmt. Hier kann beispielsweise vorgesehen sein, dass die Annäherung der Motordrehzahl an die Fahreranforderungsmotordrehzahl derart erfolgt, dass dann, wenn die Motordrehzahl im Bereich der Fahreranforderungsdrehzahl liegt, die zeitliche Änderung der Motordrehzahl im Bereich von Null liegt. In diesem Zusammenhang wird vorgeschlagen, dass die Fahreranforderungsmotordrehzahl in Abhängigkeit vom aktivierten oder zu aktivierenden Vorwärts-Anfahrgang bestimmt wird.

Zum Einleiten der zweiten Phase, also der Phase, in welcher das Motordrehmoment noch einmal erhöht wird, kann als Kriterium beispielsweise vorgesehen sein, dass nach dem Schritt c) der Schritt e) dann eingeleitet wird, wenn die Differenz zwischen der Motordrehzahl und einer Getriebeeingangsdrehzahl eine vorbestimmte Schwelle unterschreitet. Hier ist es vorteilhaft, wenn die Schwelle beruhend auf der zeitlichen Änderung der Drehzahl an der Getriebeeingangsseite bestimmt wird. Ändert sich die Getriebedrehzahl vergleichsweise stark, so kann die einer Differenzdrehzahl entsprechende Schwelle auf einen vergleichsweise großen Wert gesetzt werden. Ändert sich die Drehzahl an der Getriebeeingangsseite vergleichsweise langsam, so kann zum Optimieren des Anfahrvorgangs diese Schwelle bzw. Differenzdrehzahl kleiner gehalten werden, um der Drehzahl des Antriebsmotors ein noch sanfteres Einlaufen in die Drehzahl der Getriebeeingangsseite zu ermöglichen.

Wie bereits vorangehend angeführt, dient bei der vorgeschlagenen Vorgehensweise die zweite Stufe der Momentenerhöhung im Wesentlichen dazu, den Motor noch einmal in Anpassung an die Änderung der Drehzahl an der Getriebeeingangsseite zu beschleunigen. Das zusätzliche Moment trägt also nicht mehr zur Beschleunigung des Fahrzeugs an sich bei, so dass das zur Beschleunigung tatsächlich genutzte Moment im Wesentlichen dem Vorgabemotormoment entspricht. Daher kann vorteilhaft vorgesehen sein, dass im Schritt d) die Kupplungsanordnung derart angesteuert wird, dass dann, wenn das durch die Kupplungsanordnung übertragene Kupplungsmoment im Bereich des Vorgabemotormomentes liegt, die Kupplungsanordnung im Wesentlichen unverändert gehalten wird.

In Anwendung der Erfindungsgedanken des erfindungsgemäßen Verfahrens wird für ein Kraftfahrzeug vorgeschlagen, dass als erster Vorwärtsgang ein erste Vorwärts-Anfahrgang und als zweiter Vorwärtsgang ein zweiter Vorwärts-Anfahrgang gleichzeitig einlegbar sind und dass die Steuereinrichtung zur Durchführung eines Anfahrvorgangs dafür ausgelegt ist, den Antriebsmotor, die Getriebeanordnung und die Kupplungseinrichtung nach einem Steuer-/Regelverfahren anzusteuern, welches dem erfindungsgemäßen Verfahren bzw. wenigstens einer seiner vorstehend vorgeschlagenen Weiterbildungen entspricht.

Die Erfindung wird im Folgenden anhand in den Figuren gezeigten Ausführungsbeispielen näher erläutert.

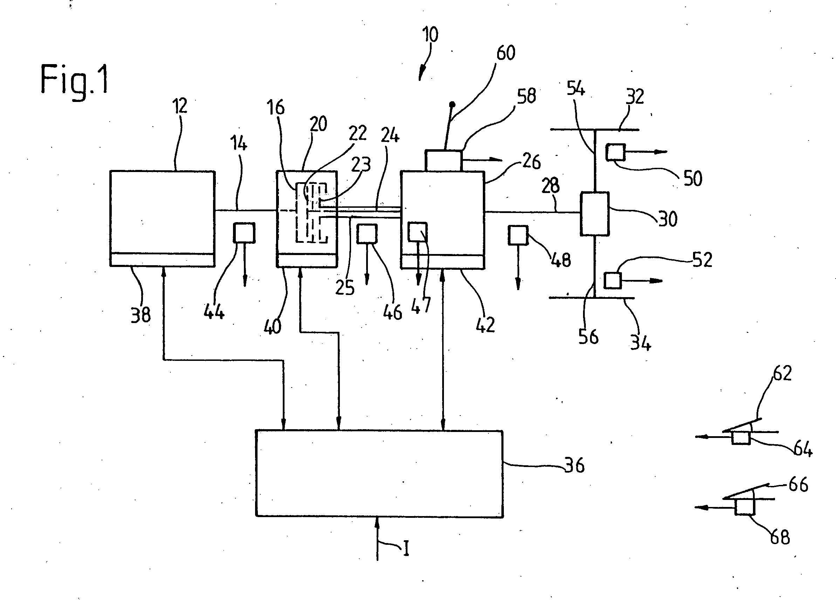

Fig. 1　　zeigt ein schematisches Blockschaltbild eines Antriebssystems, bei dem die erfindungsgemäße Vorgehensweise zum Einsatz gelangen kann.

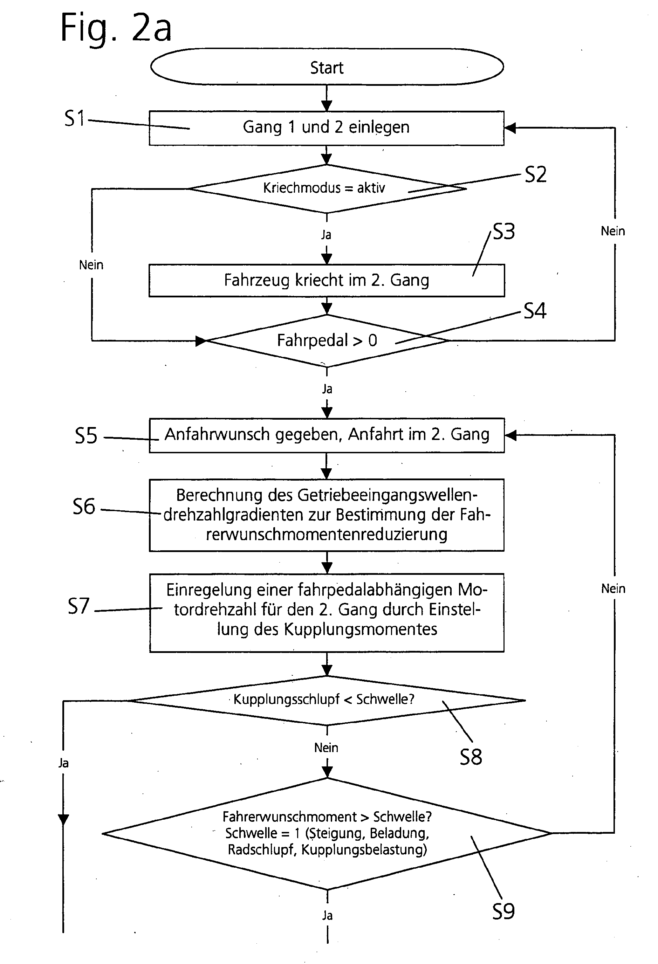

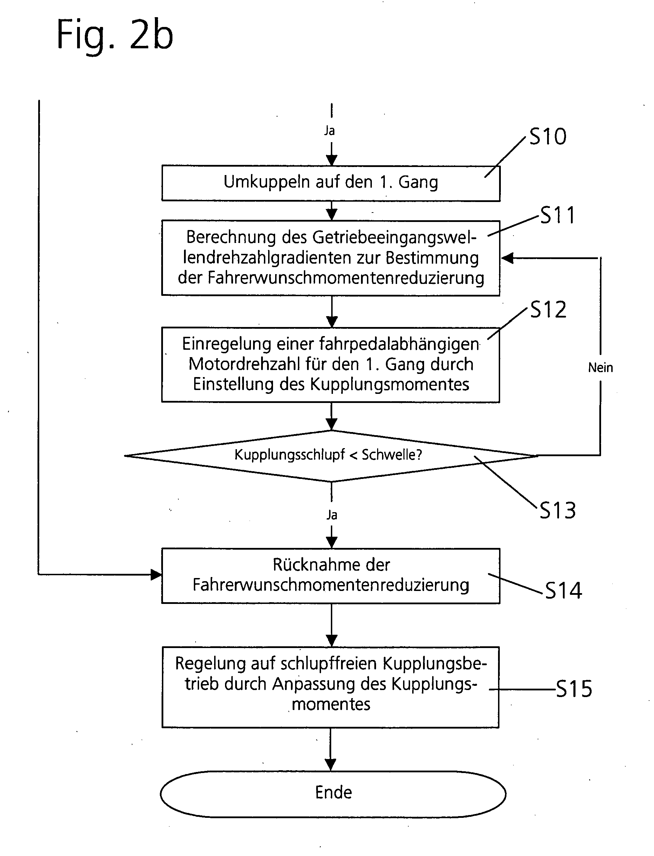

Fig. 2　　zeigt in den Teilfiguren Fig. 2a und Fig. 2b ein Flussdiagramm, dass eine mögliche Implementierung des erfindungsgemäßen Anfahrverfahrens veranschaulicht.

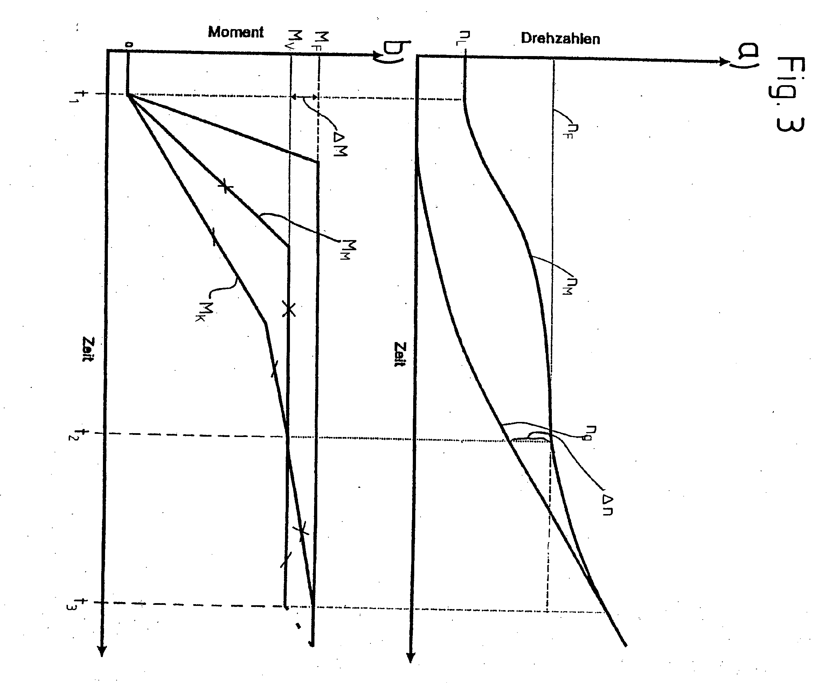

Fig. 3　　zeigt in Teilfigur 3a beispielhaft den zeitlichen Verlauf der Motordrehzahl und der Drehzahl an der Getriebeeingangsseite (Getriebeeingangswelle) bei Durchführung der erfindungsgemäßen Vorgehensweise, und in Teilfigur 3b beispielhaft den zeitlichen Verlauf des Motormoments und des Kupplungsmoments bei Durchführung der erfindungsgemäßen Vorgehensweise, und zwar jeweils für den Fall, dass es zu keinem Umkuppeln zwischen den beiden gleichzeitig eingelegten Vorwärts-Anfahrgängen kommt.

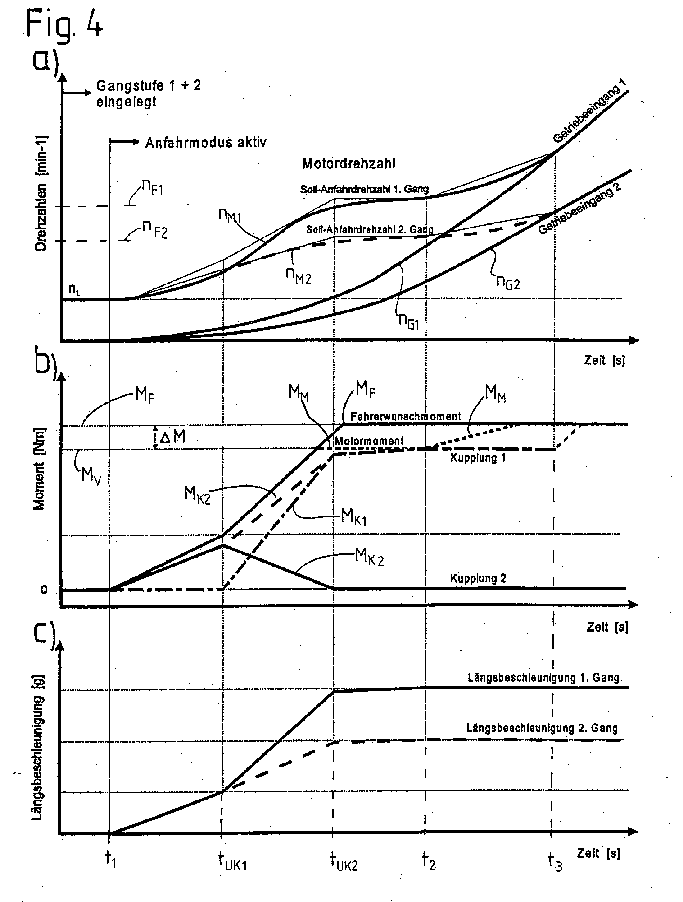

Fig. 4　　zeigt beispielhaft in Teilfigur 4a den zeitlichen Verlauf der Motordrehzahl und der Drehzahl an der Getriebeeingangswelle bei Durchführung der erfindungsgemäßen Vorgehensweise im Vergleich für den ersten und den zweiten Vorwärts-Anfahrgang, in Teilfigur 4c beispielhaft den zeitlichen Verlauf des Motormoments der von den Kupplungsanordnungen (Kupplung 1 und Kupplung 2) übertragenen Kupplungsmomente, wobei die Möglichkeit eines Umkuppelns von Kupplung 2 zu Kupplung 1 im Zuge des Anfahrvorgangs sowie die Möglichkeit der Durchführung des Anfahrvorgangs nur auf Grundlage von Kupplung 2 beide berücksichtigt sind, und in Teilfigur 4c die resultierenden Längsbeschleunigungen für das Kraftfahrzeug.

Zunächst wird mit Bezug auf die Fig. 1 allgemein ein Antriebssystem beschrieben, bei welchem das erfindungsgemäße Konzept angewandt werden kann. Das Antriebssystem 10 umfasst einen Motor bzw. ein Antriebsaggregat 12, beispielsweise eine Brennkraftmaschine 12, das über eine Antriebswelle 14 mit einer Eingangsseite 16 einer automatisierten Kupplungseinrichtung 20, beispielsweise Reibungskupplung, in Verbindung steht. Die Kupplungseinrichtung 20 weist wenigstens zwei unabhängig voneinander betätigbare Kupplungsanordnungen auf. Bei der Kupplungseinrichtung 20 kann es sich beispielsweise um eine so genannte Doppelkupplung mit zwei nasslaufenden Lamellen-Kupplungsanordnungen handeln, wie sie von der Anmelderin in verschiedenen Konstruktionen vorgeschlagen wurde (vgl. beispielsweise DE 100 04 179 A1). Es kann sich aber auch um eine Kupplungseinrichtung mit zwei trockenlaufenden Kupplungsanordnungen der Reibscheibenbauart handeln (vgl. beispielsweise EP 0 931 951 A1, DE 35 26 630 A1).

Eine Ausgangsseite 22 einer ersten Kupplungsanordnung steht über eine erste Getriebeeingangswelle 24 in Antriebsverbindung mit einer automatisierten Getriebeanordnung 26. Eine Ausgangsseite 23 einer zweiten Kupplungsanordnung steht über eine zweite Getriebeeingangswelle 25 in Antriebsverbindung mit der automatisierten Getriebeanordnung 26. Das Getriebe 26 bzw. die Getriebeanordnung kann ggf. auch als Doppelkupplungs- oder Lastschaltgetriebe bezeichnet werden.

Eine Ausgangswelle 28 der Getriebeanordnung treibt über ein Differenzial 30 angetriebene Räder 32, 34 an. Das Antriebsaggregat 12, die Kupplungseinrichtung 20 und die Getriebeanordnung 26 stehen unter der Ansteuerung einer Ansteuervorrichtung 36. Diese Ansteuervorrichtung 36 steht im Datenaustausch mit einer Leistungsstellanordnung 38 des Antriebsaggregats, um durch die Zuleitung von Ansteuersignalen oder Befehlen zur Leistungsstellanordnung 38 die Leistungsabgabe bzw. die Drehzahl des Antriebsaggregats 12 zu steuern bzw. zu regeln. Es sei darauf verwiesen, dass die Leistungsstellanordnung 38 jeglichen Bereich eines Antriebsaggregats umfasst, in welchem ein Einfluss auf dessen Drehzahl bzw. Leistungsabgabe genommen werden kann, beispielsweise das Einspritzsystem, das Drosselsystem, das Zündsystem, das Nockensystem usw. Selbstverständlich liefert die Leistungsstellanordnung 38 Information an die Ansteuervorrichtung 36, welche den Leistungsstellzustand des Antriebsaggregats 12 bezeichnet.

Ferner steht die Ansteuervorrichtung 36 mit einer Stellgliedanordnung 40 der automatisierten Kupplungseinrichtung 20 in Verbindung, um durch Zufuhr entsprechender Stellsignale zu dieser die Kupplungseinrichtung 20 bzw. die erste oder/und die zweite Kupplungsanordnung derselben zwischen einer eingerückten und einer ausgerückten Kupplungsstellung zu verstellen. Auch die Stellgliedanordnung 40 kann zur Ansteuervorrichtung 36 Information liefern, welche den momentanen Stellzustand der Kupplungsanordnung bezeichnet.

Weiter liefert die Ansteuervorrichtung 36 Ansteuersignale zur einer Stellgliedanordnung 42 der Getriebeanordnung 26. Diese Ansteuersignale führen zur Durchführung von Schaltvorgängen innerhalb der Getriebeanordnung 26 in Zuordnung zur ersten bzw. zweiten Getriebeeingangswelle. Auch hier wird der Ansteuervorrichtung 36 wieder Information rückgeliefert, welche den momentanen Stellzustand der Getriebeanordnung 26 bezeichnet. Die Ansteuervorrichtung 36 erhält weiter Information I von verschiedenen Sensoren, beruhend auf welcher Information die Ansteuervorrichtung 36 den Gesamtbetriebszustand des Fahrzeugs ermitteln kann. So ist beispielsweise ein Drehzahlsensor 44 vorgesehen, welcher die Drehzahl der Antriebswelle 14 erfasst. Es sei darauf verwiesen, dass, sofern hier von der Erfassung der Drehzahl die Rede ist, dies selbstverständlich auch die Erfassung jeglicher die Drehzahl charakterisierender Information umfasst, die dann beispielsweise in der Ansteuervorrichtung 36 zur tatsächlichen Ermittlung der Drehzahl an sich verarbeitet wird. Ferner sind Drehzahlsensoren 46 und 47 vorgesehen, welche die Drehzahlen der Getriebeeingangswellen 24 und 25 erfassen, sowie ein Drehzahlsensor 48, welcher die Drehzahl der Getriebeausgangswelle 28 erfasst. Weiter sind Drehzahlsensoren 50, 52 vorgesehen, welche die Drehzahl der angetriebenen Räder 32, 34 bzw. von diese antreibenden Wellen 54, 56 erfassen. Beruhend auf diesen beiden Sensorausgaben bzw. beruhend auf der Ausgabe des Drehzahlsensors 48 kann die Fahrzeuggeschwindigkeit errechnet werden; d.h. diese Sensorausgaben der Sensoren 48, 50, 52 beinhalten Information über die Fahrzeuggeschwindigkeit.

Weiter ist ein Schaltsensor 58 vorgesehen, welcher eine Betätigung eines Schalthebels 60 erfasst und entsprechende Information I zur Ansteuervorrichtung 36 liefert. Beruhend auf dieser Information erkennt die Ansteuervorrichtung 36, welchen Schaltvorgang ein Fahrer durchführen will und erzeugt dann zum geeigneten Zeitpunkt und ggf. unter Berücksichtigung der weiteren den Fahrzustand repräsentierenden Information einen geeignete Ansteuerbefehle für die Kupplungseinrichtung 20 und die Getriebeanordnung 26. Es sei darauf hingewiesen, dass an Stelle der Erfassung der Schalthebelbetätigung die Durchführung eines Schaltvorgangs auch nach Art eines Automatikgetriebes beruhend auf der Fahrsituation erfolgen kann.

Bei dem Antriebssystem 10 ist ferner ein Gasoder Fahrpedal 62 mit einem zugeordneten Fahrpedalsensor 64 vorgesehen, dessen Ausgangssignal das Betätigungsausmaß des Fahrpedals repräsentiert. Weiter ist ein Bremspedal 66 vorgesehen, dem ebenfalls ein Sensor 68 zugeordnet ist. Das Ausgangssignal dieses Bremspedalsensors 68 repräsentiert das Betätigungsausmaß des Bremspedals 66.

Beruhend auf all diesen Sensoreingaben und möglicherweise noch weiteren Sensoreingaben, beispielsweise von einem Umgebungstemperatursensor, einem Kühlmitteltemperatursensor, einem Gierbewegungssensor und dergleichen, erzeugt die Ansteuervorrichtung 36 verschiedene Ansteuerbefehle oder Ansteuervorgaben, welche dann in den verschiedenen anzusteuernden Aggregaten oder Komponenten, also der Leistungsstellanordnung 38, der Stellgliedanordnung 40 und der Stellgliedanordnung 42 umgesetzt werden, d.h. zur Durchführung von Stellvorgängen im Antriebsaggregat 12, in der Kupplungsanordnung 20 bzw. in der Getriebeanordnung 26 führen. Diese Ansteuervorgaben werden in der Ansteuervorrichtung 36 in einem Prozessor ermittelt, in welchem ein entsprechendes Steuerprogramm abläuft, das als Eingabe die verschiedenen Sensoreingaben I empfängt und das als Ausgabe eine Ansteuervorgabe erzeugt, die entweder als Ansteuerbefehl direkt zu den verschiedenen Stellbereichen 38, 40, 42 geleitet wird, oder die nachfolgend noch in der Ansteuervorrichtung 36 in einen jeweiligen Ansteuerbefehl umgesetzt und dann erst zu den Stellbereichen geleitet wird.

Das Flussdiagramm der Fig. 2a und 2b veranschaulicht ein vorteilhaft anwendbares Anfahrverfahren in einer besonders einfachen, nur als Beispiel dienenden Implementierung. Zu Beginn wird in Schritt S1 sowohl der erste und der zweite Getriebegang des Getriebes eingelegt. Der erste Gang, der der einen Getriebeeingangswelle zugeordnet ist und der zweite Gang, der der anderen Getriebeeingangswelle zugeordnet ist, sind die beiden Vorwärtsgänge mit der größten (erster Gang) und der nächstniedrigeren (zweiter Gang) Getriebeübersetzung. In einem Schritt S2 wird überprüft, ob ein Kriechmodus aktiviert ist. Ist dies der Fall, wird im Schritt S3 ein Kriechvorgang durchgeführt. Dieser Kriechvorgang dauert so lange an, bis in einem Schritt S4 festgestellt wird, dass das Fahrpedal vom Fahrer betätigt ist. Ist der Kriechmodus nicht aktiv, folgt auf die Überprüfung des Schrittes S2 sogleich die Überprüfung des Schritts S4.

Wird im Schritt S4 die Betätigung des Fahrpedals festgestellt, so wird dies als Anfahrwunsch interpretiert. Gemäß der Implementation gemäß Fig. 2a und 2b wird der eigentliche Anfahrvorgang auf jeden Fall auf Grundlage des zweiten Gangs begonnen (Schritt S5). Dabei bleibt neben dem zweiten Gang auch der erste Gang eingelegt und es wird eine fahrpedal- gangabhängige (vorliegend der zweite Gang) Anfahrdrehzahl eingestellt. Parallel erfolgt die Berechnung eines reduzierten Motormoments, welches sich aus dem aktuellen Fahrerwunschmoment abzüglich eines Moments, das sich aus dem Massenträgheitsmoment der motorseitigen Komponenten (unter anderem Kurbelwelle, ggf. Zwei-Massen-Schwungrad, Kupplungseinrichtung) und dem Getriebeeingangswellendrehzahlgradienten des zweiten Gangs ergibt. Dieses sich ergebende Moment wird im Wege eines entsprechenden Motoreingriffs dem Verbrennungsmotor als Sollmoment übermittelt (Schritt S6). Es wird dann bzw. parallel hierzu (in Schritt S7) eine fahrpedalabhängige Zieldrehzahl für den zweiten Gang durch Einstellung eines entsprechenden Kupplungsmoments eingestellt.

Weitere Details einer bevorzugten Durchführung der Schritte S6 und S7 lassen sich aus den nachfolgenden Erläuterungen im Zusammenhang mit Fig. 3 und Fig. 4 entnehmen.

Wird im Schritt S8 festgestellt, dass der Kupplungsschlupf an der der zweiten Gang zugeordneten Kupplungsanordnung unter einen Schwellenwert abgefallen ist, kann nun der eigentliche Anfahrvorgang beendet werden. Hierzu wird im Schritt S14 die Fahrerwunschmomentenreduzierung zurückgenommen und im Schritt S15 durch Anpassung des Kupplungsmoments der schlupffreie Kupplungsbetrieb eingeregelt.

Schritt S9 sieht eine Revision der Aktivierung-/Deaktivierungszustände der beiden Anfahrgänge vor. Wird während des Anfahrvorgangs die Fahreranforderung (Fahrerwunsch bzw. Fahrerwunschmoment) über eine parametrierbare steigungs-, belastungs-, beladungs- bzw. schlupfabhängige Schwelle erhöht, erfolgt eine Momentenübergabe von der Getriebeeingangswelle des zweiten Gangs auf die Getriebeeingangswelle des ersten Gangs, indem die dem zweiten Gang zugeordnete Kupplungsanordnung geöffnet und die dem ersten Gang zugeordnete Kupplungsanordnung fahrerwunschmomentenabhängig eingerückt, also in Eingriff gebracht wird (Schritt S10).

In Schritt S11 wird dementsprechend nun in Bezug auf den ersten Gang das reduzierte Motormoment auf Grundlage des Getriebeeingangswellengradienten des ersten Gangs berechnet. Es wird, wie nachfolgend anhand der Fig. 3 und 4 noch deutlicher wird, ein Differenzmoment berechnet, welches dem vom Motor für seine eigene Drehzahlerhöhung benötigten Moment (Verlustmoment) entspricht. Der Motor wird derart angesteuert, dass er ein Motormoment abgibt, das gegenüber dem Fahrerwunschmoment um das Differenzmoment abgesenkt ist. Gemäß Schritt S12 wird dann bzw. parallel hierzu eine fahrpedalabhängige Zieldrehzahl des erstes Gangs eingestellt, die oberhalb der gemäß Schritt S7 vorgesehenen bzw. eingestellten Zieldrehzahl des zweiten Gangs liegt.

Eine Quintessenz der Schritte S6 und S7 einerseits und der Schritte S11 und S12 andererseits ist, dass durch Kupplungs- und Motoreingriff eine fahrpedalabhängige Zieldrehzahl des zweiten bzw. ersten Gangs eingestellt bzw. vorgesehen wird, wobei die Zieldrehzahl des ersten Gangs oberhalb der des zweiten Gangs liegt.

Wird im Schritt S13 festgestellt, dass der Kupplungsschlupf an der dem ersten Gang zugeordneten Kupplungsanordnung unter einen Schwellenwert abgefallen ist, so bedeutet dies, dass der eigentliche Anfahrvorgang nun beendet werden kann. Gemäß Schritt S14 wird dann die Reduzierung des Motormoments gegenüber dem Fahrerwunschmoment zurückgenommen, der Motor also derart angesteuert, dass das von ihm abgegebene Moment auf das Fahrerwunschmoment hochfährt. Gemäß Schritt S15 wird anschließend oder gleichzeitig der schlupffreie Kupplungsbetrieb eingeregelt durch entsprechende Anpassung des Kupplungsmoments.

Es sind diverse Abwandlungen des Anfahrverfahrens denkbar. So könnte in einem Zwischenschritt zwischen dem Schritt S4 und dem Schritt S5 abgeprüft werden, ob die Fahrpedalbetätigung einen Schwellenwert übersteigt. Man könnte dann vorsehen, dass im Bejahungsfall sofort im ersten Gang angefahren wird, und dass in diesem Zusammenhang sogleich die Schritte S11 und S12 durchgeführt werden.

Fig. 3 zeigt eine vorteilhafte Ausführung des erfindungsgemäßen Verfahrens im Hinblick auf die Berechnung des Getriebeeingangswellendrehzahlgradienten zur Bestimmung der Fahrerwunschmomentenreduzierung und die Einregelung einer fahrpedalabhängigen Motordrehzahl durch Einstellung des Kupplungsmoments für einen aktivierten Anfahrgang ohne Umkuppeln zu einem anderen Anfahrgang. Mit der im Folgenden beschriebenen Vorgehensweise kann bei dem mit Bezug auf die Fig. 1 beschriebenen Antriebssystem ein entsprechender Anfahrvorgang durchgeführt werden. Es sei beispielsweise angenommen, dass zum Zeitpunkt $t_1$, der Fahrer durch Niederdrücken des Gaspedals 62 zu erkennen gibt, dass er das Fahrzeug anzufahren wünscht, beispielsweise nach einer Stillstandphase an einer Ampel. In diesem Zustand ist bzw. wird zunächst in der Getriebeanordnung 26 der erste und der zweite Gang eingelegt, und die Kupplungsanordnungen sind beide durch entsprechende Ansteuerung der Stellgliedanordnung 40 in einem ausgerückten Zustand. Das Antriebsaggregat 12 dreht mit der Leerlaufdrehzahl $n_L$ und gibt auf Grund mangelnder Belastung im Wesentlichen kein Drehmoment ab.

Wenn zum Zeitpunkt $t_1$ der Fahrer das Gaspedal 62 in einem bestimmten Ausmaß niederdrückt, so wird in Zuordnung zu diesem Betätigungsausmaß eine dieser Fahreranforderung entsprechende Fahreranforderungsdrehzahl $n_F$ ermittelt, welche letztendich mit der Stärke des Niederdrückens des Gaspedals 62 korrespondiert. Entsprechend wird ein Fahreranforderungsmotormoment $M_F$ ermittelt. In Zuordnung zu diesem Fahreranforderungsmotormoment $M_F$ wird des Weiteren ein im Folgenden noch detaillierter erläutertes Differenzmoment $\Delta M$ ermittelt. Durch Subtrahieren des Differenzmomentes $\Delta M$ von dem Fahreranforderungsmotormoment $M_F$ wird ein Vorgabemotormoment $M_V$ ermittelt, das etwas unter dem Fahreranforderungsmotormoment $M_F$ liegt. Beginnend ab dem Zeitpunkt $t_1$, wird dann durch entsprechende Ansteuerung der Leistungsstellanordnung 38 das Motormoment gemäß der Linie $M_M$ erhöht. Für den Gradienten des Motormomentes ist hier eine bestimmte Schwelle gesetzt, die zum Vermeiden einer zu raschen Erhöhung der Motordrehzahl $n_M$ vorgegeben ist. Dieser Maximalwert des Gradienten des Motormomentes kann beispielsweise unabhängig von der Fahreranforderung, also unabhängig von der Stärke des Niederdrückens des Gaspedals 62 vorgegeben sein. Ab dem Zeitpunkt $t_1$, nimmt also das Motormoment gemäß der Kurve $M_M$ näherungsweise linear zu, bis das Vorgabemotormoment $M_V$ erreicht ist. Bei Erreichen dieses Vorgabemotormoments $M_V$ wird zunächst dann durch entsprechende Ansteuerung der Leistungsstellanordnung 38 dafür gesorgt, dass das Motormoment auf diesem Wert näherungsweise konstant gehalten wird.

Gleichzeitig mit dem Beginn der Erhöhung des Motormomentes wird zum Zeitpunkt $t_1$ begonnen, eine der Kupplungsanordnungen (die vorgegebene bzw. ausgewählte Kupplungsanordnung) in Richtung Einkuppeln zu verstellen, indem entsprechende Ansteuersignale an die Stellgliedanordnung 40 ausgegeben werden. Das Kupplungsmoment dieser Kupplungsanordnung nimmt also gemäß der Kurve $M_K$ zu. Die Ansteuerung der Kupplungsanordnung erfolgt dabei in derartiger Weise, dass durch zunehmende Belastung des Antriebsaggregats bzw. Motors 12 der mit der Momentenerhöhung einhergehende Drehzahlanstieg abgebremst wird und, wie in Fig. 3a erkennbar, die Motordrehzahl $n_M$ sich der Fahreranforderungsdrehzahl $n_F$ in asymptotischer Art und Weise annähert. Zum Zeitpunkt $t_2$, zu welchem, wie den Kurven $M_M$ und $M_K$ entnehmbar, das Motormoment und das Kupplungsmoment näherungsweise den gleichen Wert des Vorgabemotormomentes $M_V$ aufweisen; liegt an der Motorseite ein Zustand vor, in welchem auf Grund der Momentengleichheit die Drehzahl $n_M$ näherungsweise konstant ist. In diesem Zustand besteht zwischen der Motordrehzahl $n_M$ und der Drehzahl $n_G$ an der betreffenden Getriebeeingangsseite, d. h. der Drehzahl der der Kupplungsanordnung zugeordneten Getriebeeingangswelle, eine Differenz $\Delta n$.

In der vorangehend beschriebenen ersten Phase des Anfahrvorgangs wird also zunächst dafür gesorgt, dass das Motormoment auf einen Wert im Bereich eines Vorgabemotormoments $M_V$ gebracht wird, dass die betreffende Kupplungsanordnung in einen Stellzustand gebracht wird, in welcher sie ebenfalls näherungsweise in der Lage ist, dieses Vorgabemotormoment $M_V$ zu übertragen, und dass am Ende dieser Phase die Änderung der Motordrehzahl $n_M$ vergleichsweise klein ist, beispielsweise etwa bei Null liegt. Während dieser Phase nimmt die Drehzahl $n_G$ der Getriebeeingangswelle 24 bzw. 25 allmählich zu, wobei, wie auch in Fig. 3a erkennbar, auch der Gradient der Drehzahl $n_G$ der Getriebeeingangswelle zunimmt. Wie im Folgenden noch dargelegt, ist es das Ziel dieser Vorgehensweise, dafür zusorgen, dass bei zunehmender Annäherung der Drehzahl $n_M$ des Motors 12 an die Drehzahl $n_G$ der Getriebeeingangswelle, diese beiden Größen näherungsweise den gleichen Verlauf haben, also näherungsweise auch den gleichen Gradienten aufweisen, um einen Einkuppelstoß zu vermeiden.

Um dies zu erreichen wird, wie bereits vorangehend dargestellt, von dem durch den Fahrer eigentlich durch entsprechende Gaspedalbetätigung angeforderten Fahreranforderungsmotormoment $M_F$ das Differenzmoment $\Delta M$ zunächst subtrahiert. Das verbleibende Vorgabemotormoment $M_V$ ist dann letztendlich dasjenige Motormoment, welches in den Antriebsstrang zur Beschleunigung eines Fahrzeugs weitergeleitet wird. Das Differenzmoment $\Delta M$ gibt eine Größe vor bzw. entspricht einem Motormoment, das in der zweiten Phase des Anfahrvorgangs, wie im Folgenden beschrieben, dazu genutzt wird, den Motor 12 zu beschleunigen, d.h. dessen Drehzahl zu erhöhen, und zwar derartig, dass bei der Motordrehzahl $n_M$ der gleiche Gradient vorliegt, wie bei der Drehzahl $n_G$ der betreffenden Getriebeeingangswelle. Dies bedeutet letztendlich, dass idealerweise das Differenzmoment $\Delta M$ derart bestimmt wird, dass durch die in der zweiten Phase des Anfahrvorgangs auftretende Erhöhung des Motormomentes von dem Vorgabemotormoment $M_V$ auf das Fahreranforderungsmotormoment $M_F$ bei in ihrer Kupplungsstellung näherungsweise konstant gehaltener Kupplungsanordnung der Motor 12 die gewünschte Beschleunigung bzw. Erhöhung seiner Drehzahländerungsrate erfährt.

Zur Bestimmung des Differenzmomentes $\Delta M$ wird dabei wie folgt vorgegangen: Man erkennt zunächst in der Fig. 3a, dass etwa zum Zeitpunkt $t_2$ die Motordrehzahl $n_M$ näherungsweise konstant ist. Um also die Motordrehzahl $n_M$ zu erhöhen, d.h. der Kurve $n_M$ einen von Null verschiedenen Gradienten zu verleihen, ist es erforderlich, ein zusätzliches Motormoment bereitzustellen, das bestimmt ist durch das Trägheitsmoment J des Motors und die gewünschte Änderung der Motordrehzahl. Wie man der Fig. 3a entnehmen kann und wie vorangehend bereits ausgeführt, ist es das Ziel, den Gradienten der Motordrehzahl so einzustellen, dass er dem Gradienten der Drehzahl $n_G$ der Getriebeeingangswelle 24 bzw. 25 entspricht. Daraus resultiert, dass für das nach dem Zeitpunkt $t_2$ hinzuzufügende Motormoment, welches letztendlich dem Differenzmoment $\Delta M$ entspricht, folgende Gleichung vorgesehen ist:

$$\Delta M = J * dn_G/dt$$

oder

$$\Delta M = J * d\omega_{Getriebe}/dt$$

Idealerweise wäre hier also zur Bestimmung des Differenzmomentes $\Delta M$ der Gradient der Drehzahl $n_G$ der betreffenden Getriebeeingangswelle in der Phase nach dem Zeitpunkt $t_2$ vorzusehen. Da in dieser Phase, wie in Fig. 3b erkennbar, die aktive bzw. aktivierte Kupplungsanordnung näherungsweise in ihrer Einrückstellung unverändert gehalten wird, tritt auch keine Änderung des Kupplungsmomentes und somit auch keine Änderung des Gradienten der Drehzahl $n_G$ der Getriebeeingangswelle auf. D.h., nach dem Zeitpunkt $t_2$ ändert sich die Drehzahl $n_G$ der Getriebeeingangswelle näherungsweise konstant bzw. linear, was eine entsprechend konstante Beschleunigung des Fahrzeugs bedeutet.

Grundsätzlich ist zum Zeitpunkt $t_1$ diese Drehzahländerung aber noch nicht exakt bekannt. Es kann daher beispielsweise derart vorgegangen werden, dass zum Zeitpunkt $t_1$ für diese zeitliche Änderung der Drehzahl $n_G$ der betreffenden Getriebeeingangswelle ein Ausgangswert vorgegeben wird, der dann beruhend auf der Kurve $n_G$ sukzessive verändert wird, so dass auch nach dem Zeitpunkt $t_1$ das Differenzmoment $\Delta M$ ständig angepasst wird. Da der Drehzahlgradient der Getriebeeingangswelle zunimmt, nimmt auch das Differenzmoment $\Delta M$ zu. Hier kann beispielsweise vorgesehen sein, dass diese Anpassung nur für eine vorbestimmte Zeitdauer nach dem Zeitpunkt $t_1$, vorgenommen wird, oder dass dann, wenn ein Zustand erreicht ist, in dem das tatsächlich abgegebene Motormoment einen zu einem bestimmten Zeitpunkt vorgegebenen Wert des Vorgabemotormomentes erreicht, die Anpassung eingestellt wird und dann mit einem unveränderten Wert des Differenzmometes $\Delta M$ weitergearbeitet wird. Grundsätzlich ist es jedoch auch möglich, beruhend auf dem Ausmaß der Betätigung des Fahrpedals 62 und dem zugeordneten Fahreranforderungsmotormoment $M_F$ und beruhend auf der nach dem Zeitpunkt $t_1$ sich einstellenden Änderung der Drehzahl $n_G$ der Getriebeeingangswelle, also der Fahrzeugreaktion, zu bestimmen, in welchem Umfeld das Fahrzeug sich bewegt. So kann beispielsweise im Versuch ermittelt werden, wie für ein bestimmtes Terrain, also abfallende Straße, ebene Straße oder ansteigende Straße, bei einem bestimmten Fahreranforderungsmotormoment sich die Drehzahl an der Getriebeeingangsseite ändern sollte. Es kann hier letztendlich ein Kennfeld generiert werden, bei dem als Eingangsgröße das Fahreranforderungsmotormoment $M_F$ und eine am Beginn des Anfahrvorgangs sich ergebende Änderung der Drehzahl $n_G$ der Getriebeeingangswelle verwendet werden und in Zuordnung zu diesen Eingangsgrößen dann eine für die Phase nach dem Zeitpunkt $t_2$ zu erwartende zeitliche Änderung der Drehzahl $n_G$ der Getriebeeingangswelle ausgelesen wird. Diese zeitliche Änderung geht dann neben dem Motorträgheitsmoment in die vorangehend angegebene Formel zur Bestimmung des Differenzmomentes $\Delta M$ ein.

Ist also der Anfahrvorgang bis zum Zeitpunkt $t_2$ fortgeschritten, also einem Zeitpunkt, in dem zwischen den beiden Drehzahlen $n_M$ und $n_G$ die Differenz $\Delta n$ erreicht worden ist, wobei diese Differenz $\Delta n$ als Schwelle betrachtet wird, so wird die nächste Phase des Anfahrvorgangs begonnen. Nach dem Zeitpunkt $t_2$ wird, wie bereits ausgeführt, die betreffende Kupplungsanordnung in näherungsweise unveränderter Stellung gehalten, so dass auch das über diese Kupplungsanordnung übertragene Drehmoment sich im Wesentlichen nicht mehr ändert. D.h., durch dieses über die Kupplungsanordnung übertragene Drehmoment ist dann auch die bei einem Fahrzeug erreichbare Beschleunigung im Anfahrvorgang vorgegeben. Es wird jedoch nunmehr durch entsprechende Ansteuerung der Leistungsstellanordnung 38 das Motormoment erhöht, und zwar um die bereits angesprochene und so wie vorangehend beschrieben bestimmte Größe des Differenzmomentes $\Delta M$. Diese Erhöhung des Motormoments führt nun dazu, dass ausgehend von dem Zustand, in welchem die Änderungsrate der Motordrehzahl $n_M$ näherungsweise Null war, der Motor beschleunigt wird, d.h. die Drehzahl ansteigt. Auf Grund der vorangehend detailliert beschriebenen Bestimmung des Differenzmomentes $\Delta M$ ändert sich der Gradient der Motordrehzahl $n_M$ derart, dass er an den in dieser Phase vorliegenden Gradienten der Drehzahl $n_G$ der dem aktivierten Gang zugeordneten Getriebeeingangswelle angepasst ist. Am Ende dieser Phase, also zum Zeitpunkt $t_3$, haben dann die Motordrehzahl $n_M$ und die Drehzahl $n_G$ der Getriebeeingangswelle 24 bzw. 25 idealerweise den gleichen Gradienten. Da diese Gradientenanpassung durch allmähliche Erhöhung des Motormomentes erfolgt, wird das Auftreten von Einkuppelstößen vermieden und das in Fig. 2 erkennbare asymptotenartige Einlaufen der Drehzahl $n_M$ in die Drehzahl $n_G$ der betreffenden Getriebeeingangswelle erzielt.

Am Ende dieser zweiten Phase, also zum Zeitpunkt $t_3$, zu welchem das Motormoment das Fahreranforderungsmotormoment $M_F$ erreicht hat, ist eine weiter beschleunigte Drehzahlerhöhung des Motors 12 nicht erforderlich und wird auch nicht auftreten, da auch das Motormoment ab dieser Phase nicht mehr erhöht wird. Da idealerweise in der Phase zwischen den Zeitpunkten $t_2$

und $t_3$ nicht nur die Gradienten der verschiedenen Drehzahlen einander angepasst worden sind, sondern auch die Drehzahlen an sich einander angeglichen worden sind, kann nach dem Zeitpunkt $t_3$ durch entsprechende Ansteuerung der Stellgliedanordnung 40 die betreffende Kupplungsanordnung dann, wie durch Strichlinien angedeutet, in ihren vollständig eingerückten Zustand gebracht werden.

Durch die vorgeschlagene zweistufige Erhöhung des Motormoments wird erreicht, dass die Motordrehzahl $n_M$ und die Getriebedrehzahl $n_G$ in ihren Änderungen einander angeglichen werden. Dabei sind die in den Fig. 3a und 3b dargestellten Verläufe für einen beispielhaften Fall dargestellt. So ist es selbstverständlich möglich, dass zu dem Zeitpunkt $t_2$, zu dem die Differenz zwischen den Drehzahlen $n_M$ und $n_G$ die Drehzahlschwelle $\Delta n$ unterschritten hat, das Kupplungsmoment noch nicht das Vorgabemotormoment $M_V$ erreicht hat. Dies bedeutet, dass zum Zeitpunkt $t_2$ dann die Motordrehzahl $n_M$ auf Grund der Tatsache, dass das über die betreffende Kupplungsanordnung übertragene Moment kleiner ist als das Motormoment, Gradienten aufweist, der etwas größer als Null ist. Dies kann jedoch dann durch in der Phase zwischen den Zeitpunkten $t_2$ und $t_3$ vorgenommene Korrekturstellbewegungen im Bereich der Kupplungsanordnung ausgeglichen werden.

Des Weiteren sei darauf hingewiesen, dass die Differenzdrehzahlschwelle $\Delta n$ vorzugsweise in Abhängigkeit vom Gradienten der Drehzahl $n_G$ der betreffenden Getriebeeingangswelle bestimmt wird. Liegt ein vergleichsweise großer Gradient vor, d. h. steigt die Drehzahl der Getriebeeingangswelle 24 bzw. 25 stark an, so kann die zweite Phase bereits zu einem früheren Zeitpunkt, also bei noch größerer Drehzahldifferenz $\Delta n$ eingeleitet werden, um für das Heranführen der Drehzahl $n_M$ des Motors 12 an die Drehzahl $n_G$ der Getriebeeingangswelle ausreichend Zeit zur Verfügung zu haben. Ferner sei noch darauf hingewiesen, dass in der Phase zwischen den zwei Zeitpunkten $t_1$, und $t_2$ die betreffende Kupplungsanordnung bzw. die Stellgliedanordnung 40 der Kupplungseinrichtung 20 derart angesteuert werden kann, dass eine von der Differenz zwischen der Motordrehzahl $n_M$ und der Fahreranforderungsdrehzahl $n_F$ abhängige Momentenveränderung bei der Kupplungsanordnung vorgenommen wird. Es wird auf diese Art und Weise die sanfte, asymptotenartige Heranführung der Drehzahl $n_M$ an die Fahreranforderungsdrehzahl $n_F$ erhalten. Ferner sei noch darauf hingewiesen, dass dann, wenn in der Phase zwischen den Zeitpunkten $t_1$, und $t_2$ die Motordrehzahl $n_M$ die Fahreranforderungsdrehzahl $n_F$ überschreitet, durch entsprechende Verminderung des Motormomentes dafür gesorgt wird, dass ein entsprechendes Weglaufen der Drehzahl nach oben verhindert wird und die Motordrehzahl $n_M$ in den gewünschten Bereich zurückgebracht wird.

Fig. 4a entspricht Fig. 3a, zeigt aber im Vergleich Ziel- bzw. Soll-Motordrehzahlen für den ersten Gang und den zweiten Gang und entsprechende Drehzahlen für die beiden Getriebeeingangswellen, und dient zur Veranschaulichung eines Anfahrvorgangs, der alleine auf Grundlage des zweiten Gangs durchgeführt wird, zur Veranschaulichung eines Anfahrvorgangs, der - etwa aufgrund entsprechend starker Fahrpedalbetätigung - alleine auf Grundlage des ersten Gangs durchgeführt wird, sowie zur Veranschaulichung eines Anfahrvorgangs, bei dem - etwa aufgrund entsprechend starker Fahrpedalbetätigung - vom zweiten zum ersten Gang umgekuppelt wird. Man erkennt, dass für den zweiten Gang eine größere Ziel- bzw. Soll-Anfahrdrehzahl vorgesehen ist. Die Kurven für die Drehzahlen der Getriebeeingangswellen sind mit $n_{G1}$ und $n_{G2}$ und die Kurven für die für den ersten und den zweiten Gang vorgesehenen Motordrehzahlen sind mit $n_{M1}$ und $n_{M2}$ bezeichnet. Links sind die für das Beispiel der Fig. 4a angenommenen Fahreranforderungsdrehzahlen $n_{F1}$ und $n_{F2}$ für den ersten und den zweiten Gang angedeutet.

Fig. 4b entspricht Fig. 3b. Es ist gestrichelt der Verlauf des Kupplungsmoments $M_{K2}$ der dem zweiten Gang zugeordneten Kupplungsanordnung (Kupplung 2) für den Fall der vollständigen Durchführung des Anfahrens alleine auf Grundlage des zweiten Gangs bzw. der diesem Gang zugeordneten Kupplungsanordnung sowie in einer ununterbrochenen Linie der Verlauf des Kupplungsmoments $M_{K2}$ dieser Kupplungsanordnung im Falle eines Umkuppelns im Zuge des Anfahrvorgangs zur dem ersten Gang zugeordneten Kupplungsanordnung (Kupplung 1) gezeigt. Die Linie $M_{k1}$ gibt den Verlauf des Kupplungsmoments an der dem ersten Gang zugeordneten Kupplungsanordnung (Kupplung 1) für den Fall dieses Umkuppelns an. Das Umkuppeln bzw. die Überschneidungsschaltung beginnt zu einem Zeitpunkt $t_{UK1}$ und endet zu einem Zeitpunkt $t_{UK2}$, die zwischen den Zeitpunkten $t_1$, und $t_2$ liegen. Die gestrichelte Kurve $M_M$ gibt den Verlauf des Motormoments an. Wie bei Fig. 3 nähert sich das Motormoment $M_M$ nach dem Zeitpunkt $t_2$ dem Fahrerwunschmoment $M_F$ an. Das Diagramm der Fig. 4b ist dahingehend etwas einfach, als dass für das vollständige Anfahren nur auf Grundlage des zweiten Gangs als auch für den Anfahrvorgang mit dem Umkuppeln vom zweiten zum ersten Gang nur eine einzige Motormomentkurve und eine einzige Fahrerwunschmomentkurve eingezeichnet sind. Tatsächlich ist das Fahrerwunschmoment im Allgemeinen für beide Abläufe unterschiedlich, Gleiches gilt auch für das jeweilige Differenzmoment $\Delta M$ und das resultierende Motormoment $M_m$.

Fig. 4c zeigt die resultierende Fahrzeuglängsbeschleunigung für den Fall einer Durchführung des Anfahrvorgangs alleine auf Grundlage des zweiten Gangs (gestrichelte Kurve) sowie für den Anfahrvorgang, bei dem vom zweiten zum ersten Gang umgekuppelt wird (durchgehende Kurve).

Vorgeschlagen wird unter anderem ein Verfahren zur Durchführung eines Anfahrvorgangs bei einem Kraftfahrzeug-Antriebssystem mit zwei Kupplungsanordnungen, denen jeweils eine eigene Getriebeeingangswelle einer Getriebeanordnung zugeordnet ist. Erfindungsgemäß ist vorgesehen, dass in Vorbereitung des Anfahrvorgangs in Zuordnung zu beiden Getriebeeingangswellen jeweils ein Vorwärts-Anfahrgang eingelegt wird und dass der Anfahrvorgang auf Grundlage eines vorgehenden bzw. beruhend zumindest auf einer Fahreranforderung ausgewählten, der beiden Vorwärts-Anfahrgänge durchgeführt wird, wobei im Zuge des Anfahrvorgangs wenigstens einmal in Abhängigkeit zumindest von der momentanen Fahreranforderung eine Revision der momentanen Aktivierungs-/Deaktivierungszustände der beiden Vorwärts-Anfahrgänge durchgeführt wird, derart, dass die Abhängigkeit zumindest von der momentanen Fahreranforderung entweder die momentanen Aktivierungs-/Deaktivierungszustände ungeändert bleiben oder durch Umkuppeln zwischen den beiden weiterhin eingelegten Vorwärts-Anfahrgängen der momentan aktivierte Vorwärts-Anfahrgang deaktiviert und der momentan nicht aktivierte Vorwärts-Anfahrgang aktiviert wird.

## Patentansprüche

1. Verfahren zur Durchführung eines ggf. einen Kriechvorgang umfassenden Anfahrvorgangs bei einem Kraftfahrzeug-Antriebssystem, welches einen Antriebsmotor (12), eine automatisierte Kupplungseinrichtung (20) und eine vermittels der Kupplungseinrichtung (20) mit dem Antriebsmotor (12) in Drehmomentübertragungsverbindung bringbare Getriebeanordnung (26) umfasst, wobei die Kupplungseinrichtung als Doppel- oder Mehrfach-Kupplungseinrichtung (20) ausgeführt ist und eine einer ersten Getriebeeingangswelle (24) zugeordnete erste Kupplungsanordnung und eine einer zweiten Getriebeeingangswelle (25) zugeordnete zweite Kupplungsanordnung aufweist,
**dadurch gekennzeichnet,**
**dass** in Vorbereitung des Anfahrvorgangs in Zuordnung zur ersten Getriebeeingangswelle ein erster Vorwärts-Anfahrgang der Getriebeanordnung (26) und in Zuordnung zur zweiten Getriebeeingangswelle ein zweiter Vorwärts-Anfahrgang der Getriebeanordnung mit einer gegenüber dem ersten Vorwärts-Anfahrgang geringeren Übersetzung beide eingelegt oder - wenn zutreffend - in einem eingelegten Zustand gehalten werden (Schritt S1),
**dass** ein vorgegebener oder ein beruhend zumindest auf einer Fahreranforderung ausgewählter der beiden Vorwärts-Anfahrgänge für den Beginn des eigentlichen Anfahrvorgangs oder eines vorausgehenden Kriechvorgangs dadurch aktiviert wird, dass die der betreffenden Getriebeeingangswelle zugeordnete Kupplungsanordnung in Einrückrichtung betätigt wird (Schritt S2 bzw. S5), und dass der jeweils andere der beiden Vorwärts-Anfahrgänge deaktiviert bleibt oder dadurch deaktiviert wird, dass die der betreffenden Getriebeeingangswelle zugeordnete Kupplungsanordnung in Ausrückrichtung betätigt wird, **dass** im Zuge des Anfahrvorgangs wenigstens einmal, vorzugsweise wiederholt oder ständig, in Abhängigkeit zumindest von der momentanen Fahreranforderung eine Revision der momentanen Aktivierungs-/Deaktivierungszustände der beiden Vorwärts-Anfahrgänge derart erfolgt (Schritt S9), dass in Abhängigkeit zumindest von der momentanen Fahreranforderung entweder

i) die momentanen Aktivierungs-/Deaktivierungszustände ungeändert bleiben, oder
ii) die momentanen Aktivierungs-/Deaktivierungszustände im Sinne einer Deaktivierung des momentan aktivierten Vorwärts-Anfahrgangs und einer Aktivierung des momentan nicht aktivierten Vorwärts-Anfahrgangs geändert werden (Schritt S10), wobei der momentan aktivierte Vorwärts-Anfahrgang dadurch deaktiviert wird, dass die der betreffenden Getriebeeingangswelle zugeordnete Kupplungsanordnung in Ausrückrichtung betätigt wird, und wobei der momentan nicht aktivierte Vorwärts-Anfahrgang dadurch aktiviert wird, dass die der betreffenden Getriebeeingangswelle zugeordnete Kupplungsanordnung in Einrückrichtung betätigt wird.

2. Verfahren nach Anspruch 1, **dadurch gekennzeichnet, dass** die Revision der momentanen Aktivierungs-/Deaktivierungszustände der beiden Vorwärts-Anfahrgänge derart erfolgt (Schritt S9), dass die Fahreranforderung oder eine damit im Zusammenhang stehende Größe, insbesondere eine ein momentanes oder künftiges Anforderungsmoment angebende oder damit im Zusammenhang stehende Größe, die zumindest von der momentanen Fahreranforderung abhängt, mit wenigstens einer vorgegebenen oder in Abhängigkeit von internen oder/und externen Parametern bestimmten Vergleichsgröße verglichen wird und in Abhängigkeit hiervon entweder

i) die momentanen Aktivierungs-/Deaktivierungszustände ungeändert bleiben, oder
ii) die momentanen Aktivierungs-/Deaktivierungszustände im Sinne der Deaktivierung des momentan aktivierten Vorwärts-Anfahrgangs und der Aktivierung des momentan nicht aktivierten Vorwärts-Anfahrgangs geändert werden. (Schritt S10)

3. Verfahren nach Anspruch 2, **dadurch gekennzeichnet, dass** ein Vergleich mit genau einer Vergleichsgröße erfolgt (Schritt S9), und dass dann, wenn die Fahreranforderung oder damit im Zusammenhang stehende Größe kleiner als die Vergleichsgröße ist, die momentanen Aktivierungs-/Deaktivierungszustände ungeändert bleiben, und dass dann, wenn die Fahreranforderung oder damit im Zusammenhang stehende Größe größer als die Vergleichsgröße ist, die momentanen Aktivierungs-/Deaktivierungszustände im Sinne der Deaktivierung des momentan aktivierten Vorwärts-Anfahrgangs und der Aktivierung des momentan nicht aktivierten Vorwärts-Anfahrgangs geändert werden (Schritt S10).

4. Verfahren nach einem der Ansprüche 1 bis 3, **dadurch gekennzeichnet, dass** die Revision der momentanen Aktivierungs-/Deaktivierungszustände der beiden Vorwärts-Anfahrgänge in Abhängigkeit in Abhängigkeit von wenigstens einer weiteren im Zusammenhang mit einer Momentenanforderung bzw. Momentenabgabe relevanten Größe erfolgt (Schritt S9).

5. Verfahren nach einem der Ansprüche 1 bis 4, **dadurch gekennzeichnet, dass** die Revision der momentanen Aktivierungs-/Deaktivierungszustände der beiden Vorwärts-Anfahrgänge in Abhängigkeit von wenigstens einer Größe bzw. einem Parameter bzw. einem Zustand aus der Gruppe Fahrzeugbelastung, Ladezustand des Fahrzeugs, Steigung des Fahrzeug-Untergrunds, Schlupf/Traktion an den angetriebenen Rädern, sonstige den Betriebs- oder Fahrzustand des Fahrzeugs bzw. des Motors charakterisierende Größen und Parameter erfolgt (Schritt S9).

6. Verfahren nach Anspruch 2 sowie nach Anspruch 4 oder/und 5, **dadurch gekennzeichnet, dass** die Vergleichsgröße in Abhängigkeit von der relevanten Größe oder/und von der Größe bzw. dem Parameter bzw. dem Zustand aus der Gruppe bestimmt wird (Schritt S9).

7. Verfahren nach einem der vorhergehenden Ansprüche, **dadurch gekennzeichnet, dass** die Revision der momentanen Aktivierungs/Deaktivierungszustände der beiden Vorwärts-Anfahrgänge in Abhängigkeit von wenigstens einer vorgegebenen Bedingung erfolgt, und dass dann, wenn diese Bedingung zutrifft, zwingend eine Änderung der momentanen Aktivierungs-/Deaktivierungszustände im Sinne der Deaktivierung des momentan aktivierten Vorwärts-Anfahrgangs und der Aktivierung des momentan nicht aktivierten Vorwärts-Anfahrgangs unterbunden wird oder zwingend die momentanen Aktivierungs-/Deaktivierungszustände im Sinne der Deaktivierung des momentan aktivierten Vorwärts-Anfahrgangs und der Aktivierung des momentan nicht aktivierten Vorwärts-Anfahrgangs geändert werden.

8. Verfahren nach Anspruch 7, **dadurch gekennzeichnet, dass** im Falle eines einen Schwellenwert übersteigenden Schlupfes an wenigstens einer der

angetriebenen Fahrzeugräder die bestehende Aktivierung des zweiten Anfahr-Vorwärtsgang zwingend beibehalten wird oder/ dass im Falle eines einen Schwellenwert übersteigenden Schlupfes an wenigstens einem der angetriebenen Fahrzeugräder und einer momentanen Aktivierung des ersten Vorwärts-Anfahrgangs zwingend der erste Vorwärts-Anfahrgang deaktiviert und der zweite Vorwärts-Anfahrgang aktiviert wird.

9. Verfahren nach einem der vorhergehenden Ansprüche, **dadurch gekennzeichnet, dass** dem eigentlichen Anfahrvorgang ein Kriechvorgang vorausgeht, der auf Grundlage des aktivierten zweiten Vorwärts-Anfahrgang durchgeführt wird (Schritt S3).

10. Verfahren nach einem der vorhergehenden Ansprüche, **dadurch gekennzeichnet, dass** als vorgegebener Vorwärts-Anfahrgang der zweite Vorwärts-Anfahrgang vorgesehen ist (Schritt S5) oder dass in dem Fall, dass bezogen auf vorgegebene Kriterien Normalbedingungen herrschen, für den Beginn des Anfahrvorgangs der zweite Vorwärts-Anfahrgang aktiviert wird.

11. Verfahren nach einem der vorhergehenden Ansprüche, **dadurch gekennzeichnet, dass** im Rahmen des Verfahren die folgenden Verfahrensschritte jeweils wenigstens einmal durchgeführt werden:

a) beruhend auf der Fahreranforderung, Ermitteln eines Fahreranforderungsmotormomentes ($M_F$) oder einer damit in Zusammenhang stehenden Größe,
b) Verringern des im Schritt a) ermittelten Fahreranforderungsmotormomentes ($M_F$) bzw. der damit in Zusammenhang stehenden Größe um einen Differenzbetrag ($\Delta M$) zum Erhalt eines Vorgabemotormomentes ($M_V$) oder einer damit in Zusammenhang stehenden Größe,
c) Setzen des Vorgabemotormomentes ($M_V$) bzw. der damit in Zusammenhang stehenden Größe als Sollgröße und Ansteuern des Antriebsmotors (12) derart, dass dieser ein im Bereich des Vorgabemotormomentes ($M_V$) liegendes Motormoment abgibt,
d) Verstellen der betreffenden Kupplungsanordnung in Richtung Einkuppeln,
e) Setzen des Fahreranforderungsmotormomentes ($M_F$) bzw. der damit in Zusammenhang stehenden Größe als Sollgröße und Ansteuern des Antriebsmotors (12) derart, dass dieser ein im Bereich des Fahreranforderungsmotormomentes ($M_F$) liegendes Motormoment abgibt.

12. Verfahren nach Anspruch 11, **dadurch gekennzeichnet, dass** im Falle einer Änderung des Fahrerwunschmoments oder/und im Zusammenhang mit einer Revision der momentanen Aktivierungs-/Deaktivierungszustände der beiden Vorwärts-Anfahrgänge oder/und in Folge einer Änderung wenigstens eines internen oder externen Parameters wenigstens einer der Schritte a) bis e) wiederholt wird.

13. Verfahren nach Anspruch 12, **dadurch gekennzeichnet, dass** im Zusammenhang mit einer Revision der momentanen Aktivierungs/Deaktivierungszustände der beiden Vorwärts-Anfahrgänge oder/und im Falle einer Änderung des Fahrerwunschmoments oder/und einer Änderung wenigstens eines internen oder externen Parameters wenigstens einer der Schritte a) bis e) abgebrochen wird und dass dann dieser Schritt oder/und wenigstens ein zugeordneter Modifikationsschritt sofort oder verzögert, ggf. nach Durchführung wenigstens eines anderen der Schritte a) bis e), wiederholt wird, wenn zutreffend unter Berücksichtigung des geänderten Fahrerwunschmoments bzw. geänderten Parameters.

14. Verfahren nach Anspruch 13, **dadurch gekennzeichnet, dass** dem Schritt d) der folgende Modifikationsschritt zugeordnet ist:

 $d_{mod}$) Verstellen der Kupplungsanordnung in Richtung Auskuppeln.

15. Verfahren nach einem der Ansprüche 11 bis 14, **dadurch gekennzeichnet, dass** der Differenzbetrag ($\Delta M$) und damit das Vorgabemotormoment ($M_V$) bzw. die damit in Zusammenhang stehende Größe in Abhängigkeit vom aktivierten bzw. zu aktivierenden Vorwärts-Anfahrgang ermittelt wird.

**Claims**

1. Method for carrying out a driving-off process, comprising, if appropriate, a creeping process, in a motor vehicle drive system which comprises a drive engine (12), an automated clutch device (20) and a transmission arrangement (26) which can be placed in a torque-transmitting connection with the drive engine (12) by means of the clutch device (20), wherein the clutch device is embodied as a double-clutch or multiple-clutch device (20) and has a first clutch arrangement assigned to a first transmission input shaft (24) and a second clutch arrangement assigned to a second transmission input shaft (25),
**characterized**
**in that** in preparation for the driving-off process in an assignment to the first transmission input shaft a first forward driving-off gear speed of the transmission arrangement (26) and in an assignment to the second transmission input shaft a second forward driving-off gear speed of the transmission arrangement are both engaged with a lower transmission ratio compared to the first forward driving-off gear speed or, if appropriate, are kept in an engaged state (step S1),
**in that** a predefined forward driving-off gear speed of the two forward driving-off gear speeds, or a forward driving-off gear speed of the two forward driving-off gear speeds which has been selected on the basis of at least one driver's request, for the start of the actual driving-off process or a preceding creeping process is activated in that the clutch arrangement which is assigned to the respective transmission input shaft is activated in the engagement direction (step S2 or S5), and in that the respective other of the two forward driving-off gear speeds remains deactivated or is deactivated in that the clutch arrangement which is assigned to the respective transmission input shaft is activated in the disengagement direction, in that in the course of the driving-off process the instantaneous activation/deactivation states of the two forward driving-off gear speeds are revised at least once, preferably repeatedly or continuously, as a function of at least the instantaneous driver's request (step S9), in such a way that, as a function of at least the instantaneous driver's request, either

 i) the instantaneous activation/deactivation states remain unchanged, or
 ii) the instantaneous activation/deactivation states are changed in the sense of deactivation of the instantaneously activated forward driving-off gear speed and activation of the instantaneously non-activated forward driving-off gear speed (step S10), wherein the instantaneously activated forward driving-off gear speed is deactivated in that the clutch arrangement which is assigned to the respective transmission input shaft is activated in the disengagement direction, and wherein the instantaneously non-activated forward driving-off gear speed is activated in that the clutch arrangement assigned to the respective transmission input shaft is activated in the engagement direction.

2. Method according to Claim 1, **characterized in that** the instantaneous activation/deactivation states of the two forward driving-off gear speeds are revised (step S9) in such a way that the driver's request or a variable related thereto, in particular a variable which indicates an instantaneous or future request torque or which is related thereto and which depends at least on the instantaneous driver's request is compared with at least one comparison variable which is predefined or is determined as a function of internal and/or external parameters, and as a function thereof either

i) the instantaneous activation/deactivation states remain unchanged, or

ii) the instantaneous activation/deactivation states are changed in the sense of deactivation of the instantaneously activated forward driving-off gear speed and activation of the instantaneously non-activated forward driving-off gear speed (step S10).

3. Method according to Claim 2, **characterized in that** a comparison with precisely one comparison variable is carried out (step S9), and **in that** if the driver's request or the variable related thereto is smaller than the comparison variable, the instantaneous activation/deactivation states remain unchanged, and **in that** if the driver's request or variable related thereto is larger than the comparison variable, the instantaneous activation/deactivation states are changed in the sense of deactivation of the instantaneously activated forward driving-off gear speed and activation of the instantaneously non-activated forward driving-off gear speed (step S10).

4. Method according to one of Claims 1 to 3, **characterized in that** the instantaneous activation/deactivation states of the two forward driving-off gear speeds are revised as a function of at least one further variable which is relevant in relation to a torque request or torque output (step S9).

5. Method according to one of Claims 1 to 4, **characterized in that** the instantaneous activation/deactivation states of the two forward driving-off gear speeds are revised as a function of at least one variable or a parameter or a state from the group comprising vehicle load, load state of the vehicle, positive gradient of the vehicle underlying surface, slip/traction at the driven wheels, other variables and parameters which characterize the operating state or driving state of the vehicle or of the engine (step S9).

6. Method according to Claim 2 as well as according to Claim 4 and/or 5, **characterized in that** the comparison variable is determined as a function of the relevant variable and/or of the variable or the parameter or the state from the group (step S9).

7. Method according to one of the preceding claims, **characterized in that** the instantaneous activation/deactivation states of the two forward driving-off gear speeds are revised as a function of at least one predefined condition, and **in that** when this condition is met a change in the instantaneous activation/deactivation states in the sense of deactivation of the instantaneously activated forward driving-off gear speed and activation of the instantaneously non-activated forward driving-off gear speed is forcibly prohibited or the instantaneous activation/deactivation states in the sense of deactivation of the instantaneously activated forward driving-off gear speed and activation of the instantaneously non-activated forward driving-off gear speed is forcibly changed.

8. Method according to Claim 7, **characterized in that** in the case of slip which exceeds a threshold value at at least one of the driven vehicle wheels, the existing activation of the second driving-off forward gear speed is forcibly maintained, or **in that** in the case of slip which exceeds a threshold value at at least one of the driven vehicle wheels and instantaneous activation of the first forward driving-off gear speed the first forward driving-off gear speed is forcibly deactivated and the second forward driving-off gear speed is activated.

9. Method according to one of the preceding claims, **characterized in that** the actual driving-off process is preceded by a creeping process which is carried out on the basis of the activated second forward driving-off gear speed (step S3).

10. Method according to one of the preceding claims, **characterized in that** the second forward driving-off gear speed is provided as a predefined forward driving-off gear speed (step S5), or **in that** in the event of normal conditions with respect to predefined criteria being present, the second forward driving-off gear speed is activated for the start of the driving-off process.

11. Method according to one of the preceding claims, **characterized in that** within the scope of the method the following method steps are respectively carried out at least once:

a) on the basis of the driver's request, determining a driver's request engine torque ($M_F$) or a variable related thereto,

b) reducing the driver's request engine torque ($M_F$) or the variable related thereto, determined in step a), by a differential amount ($\Delta M$) in order to obtain a predefined engine torque ($M_V$) or a variable related thereto,

c) setting the predefined engine torque ($M_V$) or the variable related thereto as a setpoint variable and actuating the drive engine (12) in such a way that the latter outputs an engine torque in the region of the predefined engine torque ($M_V$),

d) adjusting the respective clutch arrangement in the direction of engagement, and

e) setting the driver's request engine torque ($M_F$) or the variable related thereto as a setpoint variable and actuating the drive engine (12) in such a way that the latter outputs an engine torque in the region of the driver's request engine torque ($M_F$).

**12.** Method according to Claim 11, **characterized in that** at least one of the steps a) to e) is repeated in the event of a change in the driver's request torque and/or in relation to a revision of the instantaneous activation/deactivation states of the two forward driving-off gear speeds and/or as a result of a change in at least one internal or external parameter.

**13.** Method according to Claim 12, **characterized in that** at least one of the steps a) to e) is interrupted in relation to a revision of the instantaneous activation/deactivation states of the two forward driving-off gear speeds and/or in the event of a change in the driver's request torque and/or a change in at least one internal or external parameter, and **in that** this step and/or at least one assigned modification step is then repeated immediately or after a delay, if appropriate after the execution of at least one other of the steps a) to e), if appropriate taking into account the changed driver's request torque or changed parameter.

**14.** Method according to Claim 13, **characterized in that** the step d) is assigned the following modification step:

d$_{mod}$) adjusting the clutch arrangement in the direction of disengagement.

**15.** Method according to one of Claims 11 to 14, **characterized in that** the differential amount ($\Delta$M) and therefore the predefined engine torque (M$_V$) or the variable related thereto is determined as a function of the forward driving-off gear speed which is activated or the forward driving-off gear speed which is to be activated.

## Revendications

**1.** Procédé pour mettre en oeuvre une opération de démarrage comprenant éventuellement une opération de roulage au pas dans un système d'entraînement d'un véhicule automobile, qui comprend un moteur d'entraînement (12), un dispositif d'embrayage automatisé (20) et un agencement de boîte de vitesses (26) pouvant être amené en liaison de transfert de couple avec le moteur d'entraînement (12) par le biais du dispositif d'embrayage (20), le dispositif d'embrayage étant réalisé sous forme de dispositif d'embrayage double ou multiple (20) et présentant un premier agencement d'embrayage associé à un premier arbre d'entrée de boîte de vitesses (24) et un deuxième agencement d'embrayage associé à un deuxième arbre d'entrée de boîte de vitesses (25), **caractérisé en ce que**, en préparation de l'opération de démarrage, en association avec le premier arbre d'entrée de boîte de vitesses, un premier rapport de démarrage de marche avant de l'agencement de boîte de vitesses (26), et, en association avec le deuxième arbre d'entrée de boîte de vitesses, un deuxième rapport de démarrage de marche avant de l'agencement de boîte de vitesses avec une plus faible démultiplication par rapport au premier rapport de démarrage de marche avant, sont tous deux enclenchés ou, si cela est approprié, sont tous deux maintenus dans un état enclenché (étape S1),
un rapport de démarrage de marche avant prédéfini ou un rapport de démarrage de marche avant reposant au moins sur une commande du conducteur, sélectionné parmi les deux rapports de démarrage de marche avant, est activé pour le début de l'opération de démarrage proprement dite ou d'une opération de roulage au pas préalable, par le fait que l'agencement d'embrayage associé à l'arbre d'entrée de boîte de vitesses concerné est actionné dans le sens d'un embrayage (étape S2 ou S5) et
l'autre respectif des deux rapports de démarrage de marche avant reste désactivé ou est désactivé par le fait que l'agencement d'embrayage associé à l'arbre d'entrée de boîte de vitesses concerné est actionné dans le sens d'un débrayage,
au cours de l'opération de démarrage, au moins une fois, de préférence de manière répétée ou en continu, en fonction d'au moins la commande momentanée du conducteur, une révision des états d'activation/désactivation momentanés des deux rapports de démarrage de marche avant a lieu (étape S9) de telle sorte qu'en fonction d'au moins la commande momentanée du conducteur, soit

i) les états d'activation/désactivation momentanés restent inchangés, soit
ii) les états d'activation/désactivation momentanés sont modifiés dans le sens d'une désactivation du rapport de démarrage de marche avant activé de manière momentanée et d'une activation du rapport de démarrage de marche avant non activé de manière momentanée (étape S10), le rapport de démarrage de marche avant activé de manière momentanée étant désactivé par le fait que l'agencement d'embrayage associé à l'arbre d'entrée de boîte de vitesses concerné est actionné dans le sens d'un débrayage et le rapport de démarrage de marche avant non activé de manière momentanée étant activé par le fait que l'agencement d'embrayage associé à l'arbre d'entrée de boîte de vitesses concerné est actionné dans le sens d'un embrayage.

**2.** Procédé selon la revendication 1, **caractérisé en ce que** la révision des états d'activation/désactivation momentanés des deux rapports de démarrage de marche avant a lieu (étape S9) de telle sorte que la commande du conducteur ou une grandeur en association avec celle-ci, en particulier une grandeur indiquant un couple de commande momentané ou futur ou en association avec celui-ci, qui dépend au moins de la commande momentanée du conducteur, est comparée avec au moins une grandeur de comparaison prédéfinie ou déterminée en fonction de paramètres internes et/ou externes et, en fonction de cette comparaison, soit

 i) les états d'activation/désactivation momentanés restent inchangés, soit
 ii) les états d'activation/désactivation momentanés sont modifiés dans le sens de la désactivation du rapport de démarrage de marche avant activé de manière momentanée et de l'activation du rapport de démarrage de marche avant non activé de manière momentanée (étape S10).

3. Procédé selon la revendication 2, **caractérisé en ce qu'**une comparaison avec exactement une grandeur de comparaison a lieu (étape S9), et **en ce que** si la commande du conducteur ou la grandeur en association avec celle-ci est inférieure à la grandeur de comparaison, les états d'activation/ désactivation momentanés restent inchangés, et **en ce que** si la commande du conducteur ou la grandeur en association avec celle-ci est supérieure à la grandeur de comparaison, les états d'activation/désactivation momentanés sont modifiés dans le sens de la désactivation du rapport de démarrage de marche avant activé de manière momentanée et de l'activation du rapport de démarrage de marche avant non activé de manière momentanée (étape S10).

4. Procédé selon l'une quelconque des revendications 1 à 3, **caractérisé en ce que** la révision des états d'activation/désactivation momentanés des deux rapports de démarrage de marche avant a lieu en fonction d'au moins une autre grandeur pertinente en association avec une demande de couple ou une fourniture de couple (étape S9).

5. Procédé selon l'une quelconque des revendications 1 à 4, **caractérisé en ce que** la révision des états d'activation/désactivation momentanés des deux rapports de démarrage de marche avant a lieu en fonction d'au moins une grandeur ou d'un paramètre ou d'un état parmi le groupe incluant la sollicitation du véhicule, l'état de charge du véhicule, la pente de la chaussée sur laquelle se trouve le véhicule, le patinage/la traction au niveau des roues motrices, d'autres grandeurs et paramètres caractérisant l'état de fonctionnement ou de conduite du véhicule ou du moteur (étape S9).

6. Procédé selon la revendication 2 ainsi que selon la revendication 4 et/ou la revendication 5, **caractérisé en ce que** la grandeur de comparaison est déterminée en fonction de la grandeur pertinente et/ou de la grandeur ou du paramètre ou de l'état parmi le groupe (étape S9).

7. Procédé selon l'une quelconque des revendications précédentes, **caractérisé en ce que** la révision des états d'activation/désactivation momentanés des deux rapports de démarrage de marche avant a lieu en fonction d'au moins une condition prédéfinie et **en ce que** lorsque cette condition est satisfaite, une variation des états d'activation/désactivation momentanés dans le sens de la désactivation du rapport de démarrage de marche avant activé de manière momentanée et de l'activation du rapport de démarrage de marche avant non activé de manière momentanée est supprimée obligatoirement ou les états d'activation/désactivation momentanés sont modifiés obligatoirement dans le sens de la désactivation du rapport de démarrage de marche avant activé de manière momentanée et de l'activation du rapport de démarrage de marche avant non activé de manière momentanée.

8. Procédé selon la revendication 7, **caractérisé en ce que** dans le cas d'un patinage dépassant une valeur seuil au niveau d'au moins l'une des roues motrices du véhicule, l'activation existante du deuxième rapport de démarrage de marche avant est obligatoirement conservée ou **en ce que** dans le cas d'un patinage dépassant une valeur seuil au niveau d'au moins l'une des roues motrices du véhicule et d'une activation momentanée du premier rapport de démarrage de marche avant, le premier rapport de démarrage de marche avant est obligatoirement désactivé et le deuxième rapport de démarrage de marche avant est obligatoirement activé.

9. Procédé selon l'une quelconque des revendications précédentes, **caractérisé en ce qu'**une opération de roulage au pas précède l'opération de démarrage proprement dite, ladite opération de roulage au pas étant effectuée sur la base du deuxième rapport de démarrage de marche avant activé (étape S3).

10. Procédé selon l'une quelconque des revendications précédentes, **caractérisé en ce que** l'on prévoit en tant que rapport de démarrage de marche avant prédéfini le deuxième rapport de démarrage de marche avant (étape S5) ou **en ce qu'**au cas où, par rapport à des critères prédéfinis, il existe des conditions normales, pour le début de l'opération de démarrage, le deuxième rapport de démarrage de marche avant est activé.

11. Procédé selon l'une quelconque des revendications précédentes, **caractérisé en ce que** dans le cadre du procédé, les étapes de procédé suivantes sont effectuées à chaque fois au moins une fois :

a) sur la base de la commande du conducteur, détermination d'un couple moteur commandé par le conducteur ($M_F$) ou d'une grandeur en association avec celui-ci,

b) réduction du couple moteur commandé par le conducteur ($M_F$) déterminé à l'étape a) ou de la grandeur en association avec celui-ci d'une valeur de différence ($\Delta M$) pour obtenir un couple moteur prescrit ($M_V$) ou une grandeur en association avec celui-ci,

c) établissement du couple moteur prescrit ($M_V$) ou de la grandeur en association avec celui-ci en tant que grandeur de consigne et commande du moteur d'entraînement (12) de telle sorte que celui-ci fournisse un couple moteur situé dans la plage du couple moteur prescrit ($M_V$),

d) réglage de l'agencement d'embrayage concerné dans le sens d'un embrayage,

e) établissement du couple moteur commandé par le conducteur ($M_F$) ou de la grandeur en association avec celui-ci en tant que grandeur de consigne et commande du moteur d'entraînement (12) de telle sorte que celui-ci fournisse un couple moteur situé dans la plage du couple moteur commandé par le conducteur ($M_F$).

12. Procédé selon la revendication 11, **caractérisé en ce que** dans le cas d'une variation du couple souhaité par le conducteur et/ou en association avec une révision des états d'activation/ désactivation momentanés des deux rapports de démarrage de marche avant et/ou à la suite d'une variation d'au moins un paramètre interne ou externe, au moins l'une des étapes a) à e) est répétée.

13. Procédé selon la revendication 12, **caractérisé en ce qu'**en association avec une révision des états d'activation/désactivation momentanés des deux rapports de démarrage de marche avant et/ou dans le cas d'une variation du couple souhaité par le conducteur et/ou d'une variation d'au moins un paramètre interne ou externe, au moins l'une des étapes a) à e) est interrompue et **en ce que** cette étape et/ou au moins une étape de modification associée est/sont alors répétées immédiatement ou de manière retardée, éventuellement en fonction de la réalisation d'au moins une autre des étapes a) à e), lorsque ceci est approprié, en tenant compte du couple souhaité par le conducteur modifié ou du paramètre modifié.

14. Procédé selon la revendication 13, **caractérisé en ce que** l'on associe à l'étape d) l'étape de modification suivante :

$d_{mod}$) réglage de l'agencement d'embrayage dans le sens d'un débrayage.

15. Procédé selon l'une quelconque des revendications 11 à 14, **caractérisé en ce que** la valeur de différence ($\Delta M$) et par conséquent le couple moteur prescrit ($M_V$) ou la grandeur en association avec celui-ci sont déterminés en fonction du rapport de démarrage de marche avant activé ou devant être activé.

Fig.1

EP 1 382 479 B1

# Fig. 2a

```
                    ┌─────────────────────┐
                    │        Start         │
                    └─────────────────────┘
                              │
S1 ──────┌──────────────────────────────────────┐◄──────┐
         │        Gang 1 und 2 einlegen          │       │
         └──────────────────────────────────────┘       │
                              │                          │
                   ╱──────────────────────╲   S2         │
              Nein◄   Kriechmodus = aktiv   ╲             │
                   ╲──────────────────────╱              │
                         │ Ja                            │Nein
                         ▼                    S3          │
         ┌──────────────────────────────────────┐        │
         │      Fahrzeug kriecht im 2. Gang      │        │
         └──────────────────────────────────────┘        │
                         │                    S4          │
                   ╱──────────────────────╲               │
                  ◄      Fahrpedal > 0      ╲──────────────┘
                   ╲──────────────────────╱
                         │ Ja
S5 ──────┌──────────────────────────────────────┐◄──────┐
         │   Anfahrwunsch gegeben, Anfahrt im 2. Gang │   │
         └──────────────────────────────────────┘        │
                         │                                │
         ┌──────────────────────────────────────┐        │
         │   Berechnung des Getriebeeingangswellen-      │
S6 ──────│   drehzahlgradienten zur Bestimmung der Fah-  │
         │   rerwunschmomentenreduzierung        │        │
         └──────────────────────────────────────┘        │
                         │                                │
         ┌──────────────────────────────────────┐        │
         │   Einregelung einer fahrpedalabhängigen Mo-   │
S7 ──────│   tordrehzahl für den 2. Gang durch Einstel-  │
         │   lung des Kupplungsmomentes          │        │Nein
         └──────────────────────────────────────┘        │
                         │                                │
                   ╱──────────────────────╲               │
              Ja◄   Kupplungsschlupf < Schwelle?          │
                   ╲──────────────────────╱   S8          │
                         │ Nein                           │
                         ▼                                │
                   ╱──────────────────────╲               │
                  │  Fahrerwunschmoment > Schwelle?       │
                  │  Schwelle = 1 (Steigung, Beladung,    │
                  │  Radschlupf, Kupplungsbelastung)      │──┘
                   ╲──────────────────────╱   S9
                         │ Ja
                         │
```

# Fig. 2b

```
                    Ja
                    ↓                          S10
    ┌────────────────────────────────────┐
    │      Umkuppeln auf den 1. Gang       │
    └────────────────────────────────────┘
                    ↓                          S11
    ┌────────────────────────────────────┐
    │  Berechnung des Getriebeeingangswel- │ ◄──────┐
    │  lendrehzahlgradienten zur Bestimmung│        │
    │  der Fahrerwunschmomentenreduzierung │        │
    └────────────────────────────────────┘        │
                    ↓                          S12   │
    ┌────────────────────────────────────┐        │
    │  Einregelung einer fahrpedalabhängigen│       │ Nein
    │  Motordrehzahl für den 1. Gang durch │        │
    │  Einstellung des Kupplungsmomentes   │        │
    └────────────────────────────────────┘        │
                    ↓                                │
         ◇ Kupplungsschlupf < Schwelle? ◇───────────┘
                    ↓                          S13
                    Ja
                    ↓
    ┌────────────────────────────────────┐
    │          Rücknahme der               │
    │  Fahrerwunschmomentenreduzierung     │   S14
    └────────────────────────────────────┘
                    ↓
    ┌────────────────────────────────────┐
    │ Regelung auf schlupffreien Kupplungsbe-│
    │ trieb durch Anpassung des Kupplungs- │  S15
    │           momentes                   │
    └────────────────────────────────────┘
                    ↓
         (          Ende          )
```

Fig. 3

a)

Drehzahlen

$n_F$

$n_M$

$n_g$

$\Delta n$

$n_L$

Zeit

b)

Moment

$\Delta M$

$M_M$

$M_F$

$M_V$

$M_K$

0

Zeit

$t_1$

$t_2$

$t_3$

# Fig. 4

## a)

Gangstufe 1 + 2
eingelegt

Anfahrmodus aktiv

Motordrehzahl

Soll-Anfahrdrehzahl 1. Gang

Soll-Anfahrdrehzahl 2. Gang

Getriebeeingang 1

Getriebeeingang 2

Drehzahlen [min-1]

$n_{F1}$

$n_{F2}$

$n_{M1}$

$n_{M2}$

$n_L$

$n_{G1}$

$n_{G2}$

Zeit [s]

## b)

Moment [Nm]

$M_F$

$M_V$

$M_M$

$M_F$

$M_M$

$\Delta M$

Fahrerwunschmoment

Motormoment

Kupplung 1

$M_{K2}$

$M_{K1}$

$M_{K2}$

Kupplung 2

0

Zeit [s]

## c)

Längsbeschleunigung [g]

Längsbeschleunigung 1. Gang

Längsbeschleunigung 2. Gang

$t_1$      $t_{UK1}$      $t_{UK2}$      $t_2$      $t_3$      Zeit [s]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19958076 A1
- EP 0911206 A2
- DE 10030837 A1
- WO 0014439 A
- DE 19619717 A1
- DE 4313167 C2
- DE 10015296 A1
- DE 3812327 A1
- DE 19934997 A1
- DE 19937716 C1
- DE 19937716
- DE 10004179 A1
- EP 0931951 A1
- DE 3526630 A1